# EUROPÄISCHE PATENTSCHRIFT

(11) **EP 3 751 226 B1**
(45) Veröffentlichungstag und Bekanntmachung des Hinweises auf die Patenterteilung: **19.04.2023**
(21) Anmeldenummer: 20178288.5
(22) Anmeldetag: 04.06.2020
(51) Int. Cl.: F41G 3/04

(54) **DIRCM MIT PRÄDIKTIVER ÜBERGABE ZWISCHEN MODULEN**
DIRCM WITH PREDICTIVE TRANSFER BETWEEN MODULES
DIRCM À TRANSFERT PRÉDICTIF ENTRE LES MODULES

(30) Priorität: 12.06.2019 DE 102019004141
(43) Veröffentlichungstag der Anmeldung: 16.12.2020
(73) Patentinhaber: Diehl Defence GmbH & Co. KG, 88662 ÜBERLINGEN (DE)
(72) Erfinder: Regensburger, Martin, 92318 Neumarkt (DE)
(74) Vertreter: Diehl Patentabteilung

(56) Entgegenhaltungen:
- EP-A1- 2 527 865
- EP-A1- 3 081 895
- WO-A1-2008/062401
- WO-A1-2019/077572

## Beschreibung

Die Erfindung betrifft DIRCMs (Directed Infrared Counter Measures) bzw. entsprechende DIRCM-Systeme.

Aus "https://www.diehl.com/defence/de/presse-und-medien/themen-im-fokus/, 'Laser soll Transportflugzeuge der Bundeswehr schützen', Abruf am 04.02.2019" ist ein laserbasiertes DIRCM (Directed Infrared Counter Measure)-System zum Schutz taktischer Transportflugzeuge, anderer Flugzeugmuster oder von Hubschraubern vor Raketenangriffen bzw. modernen Lenkflugkörpern bekannt. Das Schutzsystem verwendet Hightech-Sensoren des Herstellers Elbit Systems, um Suchkopf-gesteuerte Lenkflugkörper abwehren zu können. Solche Flugkörper, eingesetzt von tragbaren Luftabwehrsystemen, stellen besonders bei Start und Landung eine große Gefahr dar. Diehl Defence integriert drei der bereits im Einsatz bewährten J-MUSIC (Multi-Spectral Infrared Countermeasure) - Lasergeräte von Elbit zu einem erweiterten Gesamtsystem, um einen kompletten 360°-Rundumschutz für das Flugzeug zu gewährleisten. Das neue DIRCM-System arbeitet in Verbindung mit dem bord-eigenen Flugkörperwarner und fokussiert den hochdynamisch und präzise geführten Laserstrahl direkt auf den Infrarot-Suchkopf des angreifenden Objekts.

Aus der EP 3 081 895 B1 ist ein Verfahren zum Betrieb eines DIRCM-Systems zum Schutz einer Plattform gegen IR-geführte Raketen bekannt, wobei das DIRCM-System eine Vielzahl von DIRCM-Subsystemen umfasst, die zum Verfolgen und Stören von IR-geführte Raketen betreibbar sind; und wobei die DIRCM-Subsysteme ein erstes DIRCM-Subsystem und ein zweites DIRCM-Subsystem umfassen, die auf der Plattform so installiert sind, dass: das erste DIRCM-Subsystem betreibbar ist, um IR-geführte Raketen in einem ersten Abdeckungsbereich zu verfolgen und zu stören; das zweite DIRCM-Subsystem betreibbar ist, um IR-geführte Raketen in einem zweiten Abdeckungsbereich zu verfolgen und zu stören; und sowohl das erste als auch das zweite DIRCM-Subsystem betreibbar sind, um IR-geführte Raketen in einem Überlappungsbereich zu verfolgen und zu stören, der einen an den ersten Abdeckungsbereich angrenzenden ersten Übergabe-Unterabschnitt und einen an den zweiten Abdeckungsbereich angrenzenden zweiten Übergabe-Unterabschnitt umfasst. Das Verfahren beinhaltet eine Überlapp-Operation und eine Übergabe-Operation.

Aufgabe der Erfindung ist es, Verbesserungen bei DIRCMs anzugeben.

Die Aufgabe wird gelöst durch ein Verfahren gemäß Patentanspruch 1 zur Bekämpfung eines anfliegenden Ziels durch ein DIRCM-System. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das DIRCM-System enthält eine Schnittstelle zu einem Warnsystem. Das Warnsystem dient zur Meldung anfliegender Ziele an das DIRCM-System über die Schnittstelle. Das DIRCM-System enthält mindestens zwei DIRCM-Module oder -Subsysteme. Jedes der Module dient zum Detektieren eines bzw. des Ziels in einem Detektionsmodus (sogenannte Akquisition), zum Verfolgen des Ziels in einem Verfolgemodus (sogenanntes "tracking") und zum Bekämpfen des Ziels in einem Strahlmodus (sogenanntes "jamming"). Bei der Detektion / Akquisition sucht das Modul also in seinem Sichtfeld nach dem Ziel bzw. der Bedrohung. "Sicht" ist dabei allgemein zu verstehen und schließt neben optischen auch andere Techniken (Infrarot / Radar / ...) ein.

Das Detektieren des Ziels bedeutet dessen Ersterkennung bzw. das Erkennen, dass ein Ziel im Erfassungs- / Verfolgungs- / Bekämpfungs-(Strahl-)bereich eines Moduls vorhanden bzw. in diesen eingetreten ist. Ein "Tracking" (siehe unten), insbesondere eine Nachführung des Moduls anhand der Ortsinformation des Ziels, wird dabei noch nicht durchgeführt. Der Erfassungsbereich ist dabei insbesondere ein Teilbereich eines Gesamtbereiches (siehe unten). Insbesondere ist der Teilbereich verschwenkbar, um durch die Verschwenkpositionen den Gesamtbereich abdecken zu können. Der Detektions- / Verfolgungs- / Strahlbereich ist insbesondere ein vergleichsweise kleiner Teilbereich des Gesamtbereiches und ist veränderbar, verschiebbar, verschwenkbar. Die Gesamtheit bzw. Vereinigungsmenge aller verschwenkten Teilbereiche ergibt den Gesamtbereich. In der Regel weist ein Modul ("Turret") eine Schwenkeinheit auf, um den Jamming-Laser und die Detektions- / Trackingeinheit (Zielerfassungs-Sensorik / Teilbereich) in eine bestimmte Raumrichtung ausrichten zu können. Bei der Detektion erfolgt die Ausrichtung extern, d. h. von außerhalb des Moduls. Der Turret wird also z. B. anhand einer externen Information, z. B. vom Warnsystem, in eine Grobrichtung geschwenkt, in der das Ziel vermutet oder zum Beispiel durch den externen Missile-Warner bereits erkannt wurde. Beim Tracking dagegen wird das Ziel vom Modul selbst in dessen Sensorik erkannt, die Ortsinformation des Ziels ist also innerhalb des Moduls bekannt. Die Ausrichtung / Nachführung der Schwenkeinheit erfolgt dann modulintern, indem dem erkannten Ziel gefolgt wird.

Das Verfolgen ("Tracking / Tracken") bedeutet ein Orten des Ziels und dessen Nachverfolgung anhand der Ortungsinformation, insbesondere des Moduls, so dass ein zielgerichtetes Bestrahlen des Ziels bzw. des o. g. IR-Suchkopfes möglich ist. Das Bekämpfen erfolgt durch Bestrahlen, also das Aussenden einer Strahlung, insbesondere des o. g. Laserstrahls, der zielgerichtet in den Suchkopf eingestrahlt wird, d. h. dass der Suchkopf bestrahlt wird. Das Modul enthält insbesondere eine Verfolgeeinheit, die die Verfolgung bewerkstelligt, und eine Strahleinheit, die die Bestrahlung bewerkstelligt. Die Strahleinheit enthält insbesondere einen Störlaser zur Bestrahlung des Ziels. Ein jeweiliges Modul bzw. deren Detektions-/Verfolge-/Strahleinheiten sind insbesondere in sogenannten "Turrets" untergebracht bzw. baulich konzentriert bzw. integriert. Die Detektions- / Verfolge- und Strahleinheit sind dabei insbesondere schwenkbar, so dass sich ein Detektions- / Trackingfenster (Erfassungsbereich für Ziele als Teilbereich des Gesamtbereiches, siehe unten) und die Strahleinheit und damit der Laserstrahl verschwenken lässt.

Jedes der Module weist einen Gesamtbereich zum Verfolgen und/oder Bekämpfen von Zielen auf. Insbesondere ist im Gesamtbereich ein Verfolgen und Bekämpfen möglich. Denkbar ist es jedoch auch, dass - insbesondere am Rand des Gesamtbereiches - lediglich ein Verfolgen oder ein Bekämpfen ermöglicht ist. Diese Randbereiche sind jedoch insbesondere so klein, dass diese vernachlässigt werden können. Der Gesamtbereich ist also der gesamte Raumbereich, in dem - insbesondere bei einem an einer zu schützenden Plattform installierten Modul - das Modul potentielle Ziele detektieren und/oder verfolgen und/oder bekämpfen bzw. bestrahlen kann. Der Gesamtbereich enthält insbesondere einen Solobereich, in dem alleine das betreffende Modul zum Verfolgen und/oder Bekämpfen des Ziels verfügbar ist. Insbesondere und alternativ oder zusätzlich enthält der Gesamtbereich einen Schnittbereich mit mindestens einem, insbesondere genau einem, anderen der Module. In diesem Schnittbereich sind alle betreffenden Module, insbesondere also zwei, zum Detektieren und/oder Verfolgen und/oder Bekämpfen des Ziels verfügbar. Die Gesamtheit bzw. Vereinigungsmenge aller Gesamtbereiche bildet einen Abwehrbereich, in dem also das DIRCM-System mit Hilfe mindestens eines Moduls in der Lage ist, Ziele zu detektieren und/oder zu verfolgen und/oder zu bekämpfen. Aktivieren eines Moduls bedeutet insbesondere Beginnen und Fortführen des Bestrahlens bzw. Verfolgens, Deaktivieren bedeutet das Beenden und Beendet-lassen des Bestrahlens bzw. Verfolgens.

Gemäß der vorliegenden Erfindung ist eine Überlappung der Gesamtbereiche einzelner Module nicht notwendig; ein lückenloses Aneinandergrenzen wäre hinreichend. In der Praxis wird eine zumindest geringe Überlappung jedoch aus Toleranz- / Sicherheitsgründen usw. jedoch vorteilhaft sein.

Das Verfahren weist folgende Schritte auf:
Ein Schritt A) wird ausgeführt, wenn das Ziel vom Warnsystem gemeldet wird. In diesem Fall wird genau eines der Module als aktives erstes Modul für dieses Ziel gewählt. hierbei wird ein solches Modul gewählt, in dessen Gesamtbereich sich das Ziel befindet. Falls nicht schon anhand der Meldung geschehen bzw. dadurch hinfällig, wird das Ziel im betreffenden Modul detektiert, insbesondere das Modul bezüglich seiner Detektions-/Verfolgung-/Strahleinheit auf das Ziel hin eingeschwenkt. Bei dem aktiven ersten Modul wird der Verfolgemodus und der Strahlmodus für das Ziel aktiviert. Alle anderen Module bleiben für dieses Ziel deaktiviert. Das betreffende Modul beginnt also mit der Verfolgung und Bestrahlung bzw. Bekämpfung des Ziels und führt diese bis auf weiteres fort. Hierzu werden insbesondere die betreffenden Modulteile anhand des Trackings so geschwenkt, dass das Ziel stets verfolgt und bestrahlt wird. Generell gelten die Aussagen im Folgenden stets für ein bestimmtes Ziel. Das System kann parallel hierzu weitere Ziele in entsprechender Weise bekämpfen. Dies soll hier jedoch der Einfachheit halber außer Betracht gelassen werden. Die Erfindung ist auf diese Fälle entsprechende übertragbar.

Im Schritt A) erfolgt also insbesondere eine Aktivierung eines bestimmten Moduls aufgrund der Detektion eines Ziels durch das Warnsystem. Dies betrifft insbesondere den Fall, dass ein Ziel im Abwehrbereich neu gemeldet wird. Hierunter ist zu verstehen, dass ein Ziel im Abwehrbereich erstmalig erkannt wird oder nach Verlieren (z. B. ungewolltes Abreißen der Verfolgung) wieder erkannt wird.

Fortan, also nachdem Schritt A) ausgeführt wurde, also ein aktives Modul sich im Verfolgemodus und Strahlmodus befindet, wird ein Schritt B) ausgeführt: In diesem Schritt bleiben für das aktive Modul bei diesem der Verfolgemodus und der Strahlmodus aktiviert. Das aktive Modul fährt also fort, das Ziel zu verfolgen und zu bekämpfen. Verfolgemodus und Strahlmodus bleiben bei allen anderen Modulen (zumindest für dieses spezielle, vom aktiven Modul gerade bekämpfte Ziel) deaktiviert. Außerdem wird eine zu erwartende zukünftige Bewegungsbahn des Ziels ermittelt. Es findet also eine Prädiktion statt, wie sich das Ziel voraussichtlich - insbesondere innerhalb des Abwehrbereiches bzw. relativ zum DIRCM-System bzw. dem zu schützenden Objekt, an dem das DIRCM-System installiert ist - bewegen wird.

Ein Schritt C) wird dann ausgeführt, wenn die potentielle bzw. ermittelte Bewegungsbahn einen Rand des Gesamtbereiches des aktiven Moduls an einer Übergabeposition schneidet. Die entsprechende Schnitt-Bedingung wird innerhalb der Schritte B) und/oder C) geprüft. Im Ergebnis wird die Übergabeposition als Schnittpunkt der Bewegungsbahn mit der Grenze / dem Rand des Gesamtbereiches ermittelt. Außerhalb dieser Grenze könnte das Ziel vom aktiven Modul nicht weiter verfolgt und bestrahlt werden.

In einem Schritt C1) wird dann ein zweites Modul gewählt, für das die Übergabeposition in dessen Gesamtbereich liegt. So kommt das zweite Modul dafür in Frage, dass das Ziel (falls dieses tatsächlich der vermuteten Bewegungsbahn folgt) vom zweiten Modul erfasst, verfolgt und bestrahlt werden könnte. Beim zweiten Modul wird oder bleibt (je nach vorherigem Zustand) der Detektionsmodus aktiviert. Im Detektionsmodus wird nun vom zweiten Modul nach dem Ziel gesucht. Dies bedeutet - wie oben erläutert - kein Tracking, da das Ziel in dieser Phase nicht - insbesondere nicht zum Zwecke der gleichzeitigen Bestrahlung - nachverfolgt wird.

Außerdem wird ein Schritt C2) ausgeführt: Beim ersten (aktiven) Modul bleiben der Verfolgemodus und der Strahlmodus aktiviert. Insbesondere wird also das Ziel weiterhin vom ersten Modul verfolgt und bestrahlt bzw. bekämpft. Dies gilt insbesondere für den Fall, dass sich ein Ziel aus einem Solobereich, in dem es vom ersten Modul bereits verfolgt und bestrahlt wurde bzw. wird, in den angrenzenden Schnittbereich bewegt. Das erste bzw. aktive Modul fährt dabei alleine, d. h. ohne das zweite Modul - ununterbrochen mit der Verfolgung und Bestrahlung des Ziels fort.

Ein weiterer Schritt D) wird ausgeführt, unmittelbar oder zeitverzögert nachdem das zweite Modul das Ziel detektiert hat:
In einem ersten Schritt D1) wird beim ersten Modul der Verfolgemodus deaktiviert. Erst nach erfolgter Deaktivierung wird dann der Verfolgemodus des zweiten Moduls aktiviert. Die Verfolgung des Ziels wird also überlappungsfrei, insbesondere aber unterbrechungsfrei, vom ersten auf das zweite Modul übertragen bzw. übergeben.

Vor, nach oder zeitgleich zum Schritt D1) wird ein Schritt D2) ausgeführt: Der Strahlmodus wird beim ersten Modul deaktiviert; vor oder zeitgleich oder nach dieser Deaktivierung wird beim zweiten Modul der Strahlmodus aktiviert oder bleibt aktiviert (falls dieser inzwischen bereits aktiviert wurde, siehe unten).

Nach bzw. mit Beendigung der Schritte D1) und D2) wird in einem Schritt D3) das zweite Modul zum ersten Modul erklärt wird.

Im Schritt D) wird im Ergebnis durch Deaktivieren des ersten Moduls und anschließendes Aktivieren des zweiten Moduls das Ziel bzw. dessen Verfolgung und Bekämpfung vom ersten an das zweite Modul übergeben. Nun ist das zweite Modul das aktive Modul und wird alsdann zum ersten Modul umdefiniert bzw. umbenannt.

Nach einem Wechsel des aktiven Moduls vom ersten zum zweiten Modul gemäß Schritt D) gilt also: Das zweite Modul wird nun zum "aktiven" und damit zum "ersten" Modul in einem nächsten erneuten Schritt B). In der Folge, d. h. bei einer erneuten Ausführung von Schritten C) und D) kann auch ggf. eine Rückübergabe an das vorherige (jetzt aber "zweite" Modul) oder eine Übergabe an ein weiteres bisher unbeteiligtes (dann "zweites") Modul erfolgen, falls noch weitere Module vorhanden sind, in deren Gesamtbereich sich das Ziel jeweils befindet bzw. bewegt. Schritt C) und D) kann also bei Bedarf bzw. falls gewünscht erneut ausgeführt werden.

Wenn auch in der Praxis unüblich, wäre es auch denkbar, dass sich in einem Schnittbereich drei oder mehr Module hinsichtlich ihrer Möglichkeit zur Verfolgung und/oder Bestrahlung überlappen. In diesem Fall ist im Schritt C1) eines der Module auszuwählen, das als zweites Modul anschließend die Verfolgung und/oder Bestrahlung des Ziels übernehmen soll. Hierfür stehen z. B. die weiter unten genannten Auswahlkriterien zur Verfügung.

Die Schritte C) und D) können also auch im Wechsel bzw. wiederholt ausgeführt werden, so lange sich das Ziel im Schnittbereich aufhält bzw. nicht erfolgreich bekämpft ist, wenn also entweder das aktive Modul aktiv bleiben soll oder eine weitere Übergabe an ein anderes Modul erfolgen soll.

Insbesondere wird in Schritt B) und/oder C) die Bewegungsbahn des Ziels wiederholt, insbesondere zyklisch jeweils erneut ermittelt bzw. aktualisiert bzw. korrigiert, um zu jedem Zeitpunkt eine möglichst gute Vorhersage der tatsächlichen Bewegungsbahn zur Verfügung zu haben. Die Schritte C) und D) werden dann je nach Ergebnis der Ermittlung entsprechend angepasst, zum Beispiel das jeweils aktuell günstigste Modul für eine potentielle Übernahme des Tracking und Jamming als zweites Modul bestimmt bzw. zu einem günstigeren Modul gewechselt.

Das Ziel ist insbesondere ein Flugkörper oder eine Rakete. Das Warnsystem ist insbesondere ein Raketenwarnsystem (Flugkörperwarner oder MWS: Missile Warning System).

Die Erfindung geht insbesondere von einem DIRCM-System aus, das an einer zu schützenden Plattform / Objekt montiert ist. D. h., Ausrichtungen, Platzierungen, Relativpositionen, Lage, Gestalt und Orientierung der sich ergebenden Gesamt-, Solo-, Schnittbereiche und des Abwehrbereiches an einem zu schützenden Objekt sind festgelegt und bekannt, da die Module fest bzw. in bekannter Weise am Objekt angeordnet sind.

Insbesondere gilt, dass bei einer Aktivierung eines Moduls dessen Verfolgeeinheit, die die Verfolgung bewerkstelligt, und dessen Strahleinheit, die die Bestrahlung bewerkstelligt, "frei" bzw. verfügbar sein muss, um das betreffende Ziel verfolgen und bestrahlen zu können. Weiterhin gilt insbesondere, dass jedes zu einem bestimmten Zeitpunkt nicht durch Verfolgung und/oder Bestrahlung belegte Modul jederzeit frei ist, um ein weiteres Ziel zu verfolgen und/oder zu bestrahlen.

Gemäß der Erfindung ergibt sich damit eine Möglichkeit zur Steuerung bzw. zum Management eines Mehrfach-DIRCM-Systems (mit zwei, drei oder mehreren Modulen).

Gemäß der Erfindung bzw. gemäß Schritt D1) ist es nicht nötig, bei einer Übergabe von einem Modul (insbesondere Turret) auf ein anderes (insb. anderen Turret) ein paralleles Verfolgen (Tracking) durch erstes und zweites Modul durchzuführen. Insbesondere ist es gemäß der Erfindung möglich, das zweite Modul bzw. dessen Detektions- / Verfolge- / Strahleinheit - ohne dass dieses ein Bestrahlen und/oder Verfolgen des Ziels durchführen würde - in die Grobrichtung des Ziels einzuschwenken, so dass das zweite Modul das Ziel in sein Sichtfeld (Erfassungsbereich der Detektions- / Verfolge- / Strahleinheit) bekommt. Sobald das Ziel im entsprechenden zweiten Sichtfeld eintrifft (Detektion gemäß Schritten C1) und D)), wird gemäß Schritt D1) / D2) die zweite Verfolgeeinheit und Strahleinheit aktiviert und das Ziel vom zweiten Modul bestrahlt. Zum Einschwenken, d. h. Grobausrichten der Detektions-/ Verfolge- / Strahleinheit auf das Ziel wird die - insbesondere vom ersten Modul und/oder DIRCM-System bereitgestellte - Bewegungsbahn und/oder Übergabeposition genutzt.

Insbesondere sind gemäß der Erfindung folgende Ausführungsformen möglich:
Die erfindungsgemäßen DIRCM-Systeme werden insbesondere z. B. in Flugzeugen installiert und dienen zur Abwehr von Infrarot-gelenkten Flugkörpern (Ziel), die entweder vom Boden (sog. MAN-PADs, Man Portable Air Defense Systems) oder von anderen Flugzeugen (sog. Air-to-Air-Missiles) abgeschossen werden. In größeren Flugzeugen inklusive Hubschraubern (Plattform, zu schützendes Objekt) wird mehr als ein DIRCM-Gerät (Modul) installiert, um einen größeren Raumwinkel abdecken zu können und damit mehr Schutz bieten zu können. Mehrere DIRCM-Geräte bilden ein DIRCM-System. Das Teil des DIRCM-Gerätes (Moduls), das das Ziel detektiert (Detektionseinheit) den Laserstrahl steuert (Verfolgeeinheit) und aussendet (Strahleinheit), wird insbesondere als Turret bezeichnet.

Die Flugzeuge besitzen insbesondere Flugkörperwarner (Warnsystem), die die ankommende Bedrohung (Ziel) erkennen und die Koordinaten (Anflugbereich) an das DIRCM-System (über die Schnittstelle) weiterleiten. Anhand der Koordinaten berechnet das DIRCM-System (bzw. dessen Steuer- und Auswerteeinheit, siehe unten) insbesondere den am besten positionierten Turret (sogenanntes Auswahlkriterium, siehe unten), der dann auf das Ziel einschwenkt, den Track (das Verfolgen) übernimmt und den Suchkopf des anfliegenden Flugkörpers mittels Laser stört (bestrahlt) und somit den Flugkörper ablenkt (bekämpft).

Sollte während des Bekämpfungsvorgangs der Flugkörper den Wirkungsbereich (Gesamtbereich) des gerade agierenden (aktiven) Turrets verlassen (sogenanntes Übergabekriterium, siehe unten), wählt das DIRCM-System einen zweiten Turret aus, der insbesondere besser positioniert ist. Die Erfindung beschäftigt sich insbesondere mit der Übergabe des Ziels von einem Turret auf den zweiten Turret, gegebenenfalls auf einen Dritten Turret usw., sofern vorhanden.

Die Erfindung beruht noch auf folgenden Erkenntnissen: Insbesondere bei agilen Begegnungssituationen zwischen Flugzeug (zu schützendes Objekt) und anfliegendem Flugkörper (Ziel) kann es geschehen, dass die Bekämpfung der Bedrohung (Ziel) von einem Turret auf den nächsten notwendig wird, weil sich das Ziel aus dem Wirkbereich (Gesamtbereich) des ersten Turrets bewegt. Das DIRCM-System entscheidet (Übergabekriterium) über den Wechsel von einem Turret zum nächsten (Auswahlkriterium). Wird eine Übergabe notwendig, schwenkt der neu ausgewählte (zweite) Turret auf die ankommende Bedrohung ein, und zwar anhand der Information hinsichtlich potentieller Bewegungsbahn und Übergabeposition, ohne dabei seinen Verfolgemodus zu aktivieren. Sobald das Sichtfeld des zweiten Turrets (Erfassungsbereich der eingeschwenkten Verfolgeeinheit) das Ziel detektiert hat und damit eine Erfassung / Tracking / Jamming möglich wird, schaltet der erste Turret den Tracker (Verfolgung) ab und der zweite Turret erst danach seinen Tracker an und beginnt mit dem Tracken des Suchkopfes des anfliegenden Flugkörpers. Dabei wird auch die Bestrahlung (überlappungsfrei oder überlappend) vom ersten auf den zweiten Turret übergeben. Sofern ein dritter Turret am zu schützenden Flugzeug installiert ist und die Bedrohung das Sichtfeld (Gesamtbereich) des zweiten Turrets zu verlassen droht, kommandiert das DIRCM-System den dritten Turret entsprechend zu oben auf den Flugkörper. Auch in diesem Fall wird das Tracking des zweiten Turrets abgeschaltet, sobald der dritte Turret mit seinem Sichtfeld (Erfassungsbereich der eingeschwenkten Verfolgeeinheit) die Bedrohung erreicht hat bzw. umgekehrt und somit anschließend dessen Tracking beginnen kann.

Gemäß der Erfindung ergibt sich eine Fortführung des "Jammings" eines Flugkörpers (Ziels) durch einen zweiten Richtkopf (zweites DIRCM-Modul).

Die Erfindung ermöglicht die Fortführung der Störung (Jamming) eines Flugkörpers (Ziel) durch einen zweiten Richtkopf. Der zweite Richtkopf wird auf die Position (Richtung) ausgerichtet, an welcher der aktuell jammende Richtkopf (erstes Modul, Turret 1) das Ziel (Flugkörper) nicht weiter stören kann. Diese Position ist definiert durch die Bewegung des Turret 1 und den geschätzten Schnittpunkt (Übergabeposition) mit dessen Begrenzung oder Abschattung (Obscuration).

Gemäß der Erfindung ergibt sich ein Verfahren zur Übergabe an eine zweite Richteinheit, die es ermöglicht das Stören eines Suchkopfes (Ziel) aufrecht zu erhalten, ohne durch zwei Verfolgeeinheiten parallel zu tracken.

Gemäß der Erfindung wird der zweite Richtkopf in Richtung des Übergabepunktes (Übergabeposition) ausgerichtet, bevor der erste Richtkopf (aktiver Turret) diesen Punkt erreicht. Auf diese Weise kann ein paralleles Tracking durch beide Richtköpfe (Module) vermieden werden.

Gemäß der Erfindung ergibt sich insbesondere folgendes Verfahren:
1.) Der aktuell jammende Jamming Turret (erstes Modul, JT#1) überwacht mithilfe einer - insbesondere von ihm durchgeführten - Prädiktion, ob das Jamming in nächster Zeit aufgrund einer Abschattung (Obscuration) unterbrochen wird. Dies ist der Fall, wenn die von JT#1 prädizierte Bewegung der Bedrohung (Bewegungsbahn des Ziels) die Grenze der Obscuration Map (Gesamtbereich) von JT#1 erreicht, sodass JT#1 das Jamming nicht mehr fortsetzen kann. Der Schnittpunkt der prädizierten Bewegung der Bedrohung (Bewegungsbahn) mit der Grenze der Obscuration Map von JT#1 wird im Folgenden als prädizierte Übergabeposition bezeichnet.
2.) Stellt JT#1 fest, dass er das Jamming in nächster Zeit nicht mehr fortsetzen kann, meldet er dies zusammen mit der prädizierten Übergabeposition an das übergeordnete System (zum Beispiel DIRCM-Master). Der DIRCM-Master wählt abhängig vom Status der restlichen JTs und der prädizierten Übergabeposition denjenigen JT (JT#2) aus, der das Jamming fortsetzen soll. Daraufhin bewegt JT#2 sich (d. h. den Teilbereich) mit aktivem Laser zu der prädizierten Übergabeposition, die von JT#1 zyklisch aktualisiert und an JT#2 übertragen wird. Durch die zyklische Aktualisierung werden die Bewegungen des Flugzeuges und der Bedrohung berücksichtigt, die die prädizierte Übergabeposition auf der Grenze der Obscuration Map von JT#1 wandern lassen.
3.) Hat JT#2 (der Teilbereich) die prädizierte Übergabeposition erreicht, beginnt er mit der Akquisition (Aktivierung des Detektionsmodus), d. h. er sucht in seinem Sichtfeld (Teilbereich) nach der bisher von JT#1 gejammten Bedrohung. JT#2 folgt der Bedrohung jedoch nicht, wenn er sie detektiert hat. JT#2 führt also kein zu JT#1 paralleles Tracking durch.
4.) Hat JT#2 die Bedrohung detektiert, signalisiert er dies im System. JT#1 beendet daraufhin das Tracking und Jamming. JT#2 beginnt das Tracking und setzt das Jamming der Bedrohung fort.

In einer bevorzugten Ausführungsform wird in Schritt C1) im Detektionsmodus ein verschwenkbarer (o.ä., siehe oben) Detektionsbereich als Teilbereich des Gesamtbereiches auf das Ziel hin überwacht. In Schritt C1) wird dabei der Teilbereich abhängig von der Bewegungsbahn und/oder der Übergabeposition auf die Bewegungsbahn und/oder die Übergabeposition hin ausgerichtet und/oder nachgeführt wird, wobei die Ausrichtung / Nachführung unabhängig vom Ziel ist. Die Nachführung / Ausrichtung erfolgt insbesondere durch Verschwenken der entsprechenden Detektionseinheit. "Unabhängig" bedeutet, dass die Ausrichtung von außerhalb des zweiten Moduls gesteuert / vorgegeben wird, insb. von einem DIRCM-Master. Im Gegensatz hierzu wird dagegen ein Tracking von innerhalb des jeweiligen Moduls durchgeführt, nämlich basierend auf der Ortung des erfassten Ziels durch das Modul selbst. Damit ist zum Detektieren des Ziels und der Vorbereitung auf einen Bestrahlungs- / Jamming-Wechsel vom ersten zum zweiten Modul kein paralleles Tracking durch beide Module notwendig.

In einer bevorzugten Ausführungsform wird in Schritt A) das aktive Modul nach einem Auswahlkriterium gewählt. Für derartige Auswahlkriterien stehen dem Fachmann eine Vielzahl von Möglichkeiten zur Verfügung, die z. B. je nach Bekämpfungstaktik, Bedrohungssituation, zu schützendem Objekt usw. wählbar sind bzw. angepasst werden können. Ein entsprechendes Auswahlkriterium kann auch verwendet werden, wenn im Schnittbereich mehr als zwei Module vorhanden sind, die als jeweiliges zweites Modul das Ziel von einem ersten Modul übernehmen könnten. Auch hier kann per Auswahlkriterium bestimmt werden, welches der vorhandenen Module als zweites Modul für die Übernahme der Bekämpfung zuständig sein soll. Die Grundbedingung, dass das Modul frei und bereit für eine Verfolgung und/oder Bestrahlung ist, muss jedoch insbesondere für alle Varianten des Auswahlkriteriums erfüllt sein.

Insbesondere ergibt sich also folgendes Vorgehen: Wenn das Ziel vom Warnsystem im Solobereich detektiert wird, wird die Bekämpfung mit dem dort zuständigen Modul gestartet. Wenn das Ziel vom Warnsystem im Schnittbereich detektiert wird, wird ein verfolgendes und bekämpfendes Modul nach dem Auswahlkriterium gewählt.

In einer bevorzugten Variante dieser Ausführungsform wird als Auswahlkriterium alternativ oder in beliebiger Kombination ("und/oder"-Varianten) z. B. genutzt:
- Bei einem Ziel, das sich in einem Solobereich - falls vorhanden - eines Gesamtbereiches aufhält: das zugehörige Modul zum Solobereich.
- Bei einem Ziel in einem Schnittbereich - falls vorhanden - mindestens zweier Gesamtbereiche: das Modul aus denen, die im Schnittbereich verfügbar sind nach folgenden Kriterien:
   ∘ Dasjenige in einem vorgebaren Entfernungsbereich zum Ziel, insbesondere dasjenige, das dem Ziel am nächsten ist. Hier kann von einer möglichst guten Bekämpfung ausgegangen werden.
   ∘ Dasjenige mit der wenigsten Abweichung der aktuellen Verfolgungs- und/oder Bekämpfungs-ausrichtung der Verfolgeeinheit und Strahleinheit bzw. des Teilbereiches bzw. dessen Schwenkstellung von einer Mittelstellung eines entsprechenden Schwenkmittels bezüglich eines Verfolgungs- und/oder Bekämpfungsbereiches des Moduls, der insbesondere der Gesamtbereich ist. Dies beruht auf der Überlegung, dass ein Modul bzw. dessen bewegliche Verfolge-/Strahleinheit aus einer Mittelstellung ausgelenkt werden muss, um Ziele bis zu einem Rand des Gesamtbereiches erfassen zu können. Optimal erscheint es daher, ein Modul auszuwählen, für das die aktuelle Ausrichtung der Komponenten zur Bekämpfung des Ziels aktuell möglichst nahe der Mittelstellung liegt. So verbleibt ein maximaler "Reservebereich" bis zum Rand des Gesamtbereiches, um das Ziel bei entsprechenden Bewegungen möglichst lange durch Auslenkung der Komponenten verfolgen zu können.
   ∘ Dasjenige mit einem vorgebbaren (d. h. bestimmten vorgebbaren Eigenschaften eines) Gesamtbereich oder - falls vorhanden - Schnittbereich, insbesondere einem möglichst großen entsprechenden Bereich. So ist eine möglichst lange weitere Bekämpfung durch das betreffende Modul zu erwarten.
   ∘ Dasjenige mit einer vorgebbaren Erfolgsprognose zur erfolgreichen Bekämpfung, insbesondere mit der besten Erfolgsprognose. Eine solche Erfolgsprognose kann beispielsweise aus einer zu erwartenden Flugbahn des Ziels und einer voraussichtlichen Bestrahlungsdauer zur effektiven Bekämpfung des Ziels ermittelt werden. So ist ein besonders guter und/oder schneller Bekämpfungserfolg zu erwarten.

In einer bevorzugten Ausführungsform wird als Schnittstelle eine Schnittstelle zu einem Warnsystem zur Meldung eines jeweiligen Anflugbereiches eines anfliegenden Ziels verwendet. Mit anderen Worten ist das Warnsystem in der Lage, einen Anflugbereich für das Ziel auszugeben und an das System zu übermitteln. Der Anflugbereich ist insbesondere ein Bereich, der größer ist als der Zielbereich eines Moduls bei einer bestimmten Auslenkung. Der Zielbereich gibt dabei die Genauigkeit an, innerhalb der das Ziel vom Modul erfolgreich verfolgt wird. Dieser ist klein genug, dass ein Bestrahlen des Ziels im Zielbereich dazu führt, dass der Störstrahl zielgenau in den IR-Suchkopf des Ziels eingestrahlt wird. Der Erfassungsbereich ist derjenige Bereich, in dem sich das Ziel befinden muss, damit dem Modul ein erfolgreiches Verfolgen gelingen kann, d. h. das Ziel erfolgreich im Rahmen des Zielbereiches zielgenau erfassen kann. Mit anderen Worten ist anhand des Moduls ein ausreichend genaues Zielen möglich, um das Ziel sicher zu bestrahlen. Das Warnsystem liefert dagegen lediglich eine Grobrichtung bzw. Groblage des Ziels, so dass ein zielgerichtetes Bestrahlen nicht immer sichergestellt ist.

In einer bevorzugten Ausführungsform wird Schritt D) nur bei Erfüllung eines Übergabekriteriums ausgeführt. Zusätzlich wird das Übergabekriterium weiterhin geprüft, so lange es nicht erfüllt ist. Insbesondere wird also in Schritt D) das Übergabekriterium permanent, dauerhaft bzw. wiederholt auf Erfüllung geprüft. So lange es nicht erfüllt ist, bleibt das erste Modul alleine aktiv mit Tracking und Jamming und das Übergabekriterium wird weiterhin geprüft. Bei dessen Erfüllung wird Schritt D1) bis D3) ausgeführt und das Ziel an das zweite Modul übergeben, das daraufhin hinsichtlich Verfolgung und Bestrahlung zum ersten aktiven Modul wird. Für das Übergabekriterium gelten sinngemäß die gleichen Aussagen wie oben zum Auswahlkriterium. Auch hier stehen dem Fachmann eine Vielzahl von Möglichkeiten zur Verfügung.

In einer bevorzugten Variante dieser Ausführungsform wird als Übergabekriterium alternativ oder in beliebiger Kombination ("und/oder") genutzt:
- dass das zweite Modul zu einer erfolgreichen Zielverfolgung und/oder -bestrahlung bereit wird. Dies bedeutet, dass derjenige Moment abgewartet wird, ab dem das zweite Modul überhaupt in der Lage ist, die Zielverfolgung und/oder -bestrahlung zu bewerkstelligen, z. B. da es zuvor wegen der Verfolgung und/oder Bestrahlung eines anderen Ziels belegt war.
- dass eine vorgebbarer Grenzparameter beim ersten und/oder zweiten Modul erreicht (über- oder unterschritten) ist. Mögliche Grenzparameter sind z. B. Grenztemperatur, Grenzbelastung, Grenzbetriebsdauer, Grenzentfernung zum Ziel usw. Insbesondere soll so z. B. das betreffende Modul geschützt werden oder Belastungen auf die Module verteilt werden.
- dass das erste Modul das Ziel nicht mehr erfolgreich verfolgt und/oder bestrahlt. Eine sichere Zielbekämpfung durch das erste Modul ist dann nicht mehr möglich.
- dass das Ziel eine vorgebbare Grenzfläche im Gesamtbereich erreicht. Dies ist ein geometrisch besonders einfaches Kriterium.
- dass das Ziel eine vorgebbare Entfernung zum Rand des Gesamtbereiches unterschreitet. Außerhalb des Gesamtbereiches könnte das erste Modul das Ziel ohnehin nicht mehr bekämpfen, eine vorherige Übergabe ermöglicht eine nahtlose Bekämpfung, falls das Ziel tatsächlich aus dem Gesamtbereich auswandert.
- dass das Ziel den Gesamtbereich an der Grenze verlässt. Spätestens dann ist das erste Modul nicht mehr in der Lage, das Ziel zu bekämpfen und die Bekämpfung muss an das dann zuständige (hier zweite) Modul übergeben werden.

Durch entsprechende Übergabekriterien können bestimmte Taktiken der Zielverfolgung und -bestrahlung umgesetzt werden. Insbesondere erfolgt also eine Übergabe, sobald, also unverzüglich nachdem, das zweite Modul bereit ist. Die Grundbedingung, dass das zweite Modul frei und bereit für eine Verfolgung und/oder Bestrahlung ist, muss jedoch insbesondere für alle Varianten des Übergabekriteriums erfüllt sein.

Gemäß der Erfindung wird das zweite Modul insbesondere in Schritt C1) mit der Aktivierung des Detektionsmodus auf das Ziel hin grob ausgerichtet, so dass das Ziel in den Erfassungsbereich des zweiten Moduls gelangt. Dies geschieht anhand der bereitgestellten Bewegungsbahn / Übergabebereich. Durch die Grobausrichtung wird sichergestellt, dass das Ziel sicher in den (potentiellen) Erfassungsbereich des zweiten Moduls gelangt bzw. schlussendlich in diesem liegt, so dass ein erfolgreiches Verfolgen (Tracking: erfolgreiches Erfassen des Ziels im Zielbereich, um es exakt zu verfolgen bzw. nachzuführen) durch das zweite Modul möglich wird. Als Übergabekriterium wird daher insbesondere genutzt: dass das zweite Modul zu einer erfolgreichen Zielverfolgung und/oder -bestrahlung dadurch bereit wird, dass das Ziel in den Erfassungsbereich des zweiten Moduls - insbesondere von dessen Verfolgeeinheit - gelangt.

Gemäß der Erfindung wird vermieden, bei einer Übergabe von einem Modul (erstem Modul, insbesondere Turret) auf ein anderes (insb. zweites, anderer Turret) gemäß Schritt D1) und D2), ein paralleles Verfolgen (Tracking) durch erstes und zweites Modul durchzuführen. Insbesondere ist es so gemäß der Erfindung möglich, das Verfolgen (des Ziels durch das erste Modul in Schritt D1) und D2) zu deaktivieren, in dem Moment oder kurz nachdem das zweite Modul bzw. dessen Verfolgeeinheit das Ziel - durch Einschwenken der Verfolgeeinheit in die Grobrichtung des Ziels - in sein Sichtfeld (Erfassungsbereich der Verfolgeeinheit) bekommt bzw. detektiert. Dabei ist der Verfolgemodus des zweiten Moduls nach wie vor deaktiviert. Sobald das Ziel im entsprechenden zweiten Sichtfeld (Erfassungsbereich) wie oben erläutert eintrifft oder da das Ziel sich nun dort befindet, wird gemäß Schritt D1), D2) die zweite Verfolgeeinheit aktiviert und das Ziel vom zweiten Modul dann exakt verfolgt und bestrahlt. Zum Einschwenken, d. h. Grobausrichten der Verfolgeeinheit auf das Ziel wird dabei die Prädiktion in Form von Bewegungsbahn und/oder Übergabepunkt, jedoch kein Tracking genutzt, um den zweiten Erfassungsbereich ausreichend genau zum Ziel hin zu führen.

In einer bevorzugten Ausführungsform strahlen - insbesondere im Zeitintervall zwischen (einschließlich) den Schritten C1) und D2), jedenfalls ab oder nach der Aktivierung des Strahlmodus beim zweiten Modul - wenigstens das erste und das zweite Modul zum Bekämpfen des Ziels ein vorgebbares Signalmuster ab. Das Signalmuster weist einen Zeitverlauf auf. Die Signalmuster des ersten und des zweiten Moduls werden dann im oder vor dem Schritt D2) hinsichtlich des Zeitverlaufs phasensynchronisiert.

"Phasensynchronisiert" bedeutet dabei Folgendes: Im Allgemeinen wird das Bestrahlen bzw. Bekämpfen des Ziels anhand eines Stör- bzw. Bestrahlungscodes durchgeführt. Der Code ist ein spezifisches Muster von Strahlungspulsen /-signalformen, wobei das Muster nach einem bestimmten Zeitplan ausgestrahlt wird. Phasensynchronisierte Module erzeugen jeweils zur gleichen Zeit und im gleichen Zeitverlauf bzw. um einen konstanten Zeitversatz versetzt das gleiche Muster. Das heißt, sie geben gleichzeitig oder zeitversetzt Strahlung gleicher oder unterschiedlicher Amplituden ab, jedoch handelt es sich im Zeitverlauf um die gleichen Signale bzw. jeweils um Abschnitte eines nach dem gewünschten Zeitverlauf verlaufenden Signals. Hierunter wird unter anderem auch eine "Bitsynchronisation" verstanden.

Wenn der Flugkörper gleichzeitig vom ersten und vom zweiten Modul bestrahlt wird, tritt demnach keine destruktive Interferenz auf, sondern die beiden am Ziel eintreffenden Signale werden dort addiert. Daher kann in diesem Fall insbesondere die Amplitude der einzelnen abgestrahlten Signale der Module reduziert werden.

Wenn die Bestrahlung des Ziels in Schritt D2) vom ersten Modul auf das zweite Modul ohne Pause bzw. Unterbrechung wechselt, wird der Flugkörper permanent von dem ununterbrochenen Störcode getroffen. Wenn dagegen während des Wechsels vom ersten zum zweiten Laserstrahl im Schritt D2) eine Pause eines Zeitintervalls dT auftritt (der Flugkörper wird während der Pause weder vom ersten noch vom zweiten Modul bestrahlt), kann in einer ersten Ausführungsform der Code für die jeweilige Zeit dT angehalten werden. Das erste Modul beendet seine Bestrahlung dann in der Codephase P0 und nach dem Zeitintervall dT setzt das zweite Modul sein Signal bei der gleichen Phase P0 fort. Im Ziel wird dann der Ablauf des Codes für die Zeit dT pausiert, danach bei der gleichen Phase fortgesetzt.

In einer alternativen Ausführungsform läuft die Phase des Störcodes in Echtzeit weiter, d. h. das erste Modul beendet die Bestrahlung im Schritt D2) mit der Codephase P0, nach dem Zeitintervall dT setzt das zweite Modul die Bestrahlung bei der Phase P0 + dT fort. Im Ziel wird dann der Codeteil während des Zeitintervalls dT übersprungen, der Code wird zwar mit einer "Lücke", ansonsten aber in fortlaufender Echtzeit eingestrahlt. Das entsprechende Vorgehen kann wieder je nach Bekämpfungstaktik gewählt werden.

In einer bevorzugten Ausführungsform wird folgendes ausgeführt: in oder nach dem Schritt C1) wird beim zweiten Modul der Strahlmodus, nicht aber der Verfolgemodus, aktiviert, wobei vom zweiten Modul zumindest nicht (zielgerichtet) auf das Ziel gezielt wird (dieses wird getroffen oder nicht) oder sogar bewusst am Ziel vorbeigezielt wird (dieses wird sicher nicht getroffen). Dies gilt insbesondere in Verbindung mit der Ausführungsform synchronisierter Codes gemäß oben. In Schritt D2) bleibt dann der Strahlmodus beim zweiten Modul aktiviert und vom zweiten Modul wird bewusst auf das Ziel gezielt bzw. der Laserstrahl dorthin eingeschwenkt. Bei dem Nicht- oder Vorbeizielen ist insbesondere der zweite Verfolgemodus inaktiv.

Das Vorbei- bzw. Nicht-Zielen kann dabei - insbesondere falls beim zugehörigen Modul der Verfolgemodus deaktiviert ist - auf Basis des Anflugbereiches des Warnsystems erfolgen. In Schritt D2) wird dann gegebenenfalls weiterhin auf das Ziel gezielt, falls bereits vorher schon auf das Ziel gezielt wurde.

In einer bevorzugten Ausführungsform kann generell eine Doppel- oder Mehrfachbestrahlung durchgeführt werden, sobald das Ziel von mindestens zwei Strahleinheiten bestrahlbar ist: Dabei kann in einer ersten Variante stets genau ein Strahl exakt auf das Ziel gerichtet sein und die anderen Strahlen bewusst am Ziel vorbeizielen, wie oben erläutert wurde. In einer alternativen Variante, kann aber - bei phasensynchronisierten Strahlen - eine beliebige Anzahl phasensynchronisierter Strahlen auch gleichzeitig auf das Ziel einstrahlen bzw. zumindest nicht bewusst am Ziel vorbeistrahlen. D. h. genau ein Strahl des Moduls mit aktiviertem Verfolgemodus kann durch exaktes Zielen einstrahlen, die anderen können auf sonstige Weise einstrahlen, z. B. anhand des Anflugbereiches, da deren Verfolgemodus nicht aktiviert ist.

In einer bevorzugten Ausführungsform - nur in Verbindung mit dem o. g. Anflugbereich - zielt das zweite Modul dadurch am Ziel vorbei, dass es auf einen Rand oder nach außerhalb des vom Warnsystem bereitgestellten Anflugbereiches zielt, oder es zielt (in Verbindung mit der Ausführungsform phasensynchronisierter Module) dadurch nicht am Ziel vorbei, dass es auf den Rand oder nach innerhalb des Anflugbereiches, insbesondere auf das Zentrum des Anflugbereiches, zielt. So kann sowohl das Zielen als auch das Vorbeizielen ohne Nutzung des aktiven Verfolgemodus beim entsprechenden Modul durchgeführt werden.

In einer bevorzugten Ausführungsform werden wenigstens einer oder mehrere oder alle der - falls vorhanden - Bereiche, also von Detektions- bzw. Teil- / Gesamt- / Solo- / Schnitt- und Abwehrbereich in einem Koordinatensystem als mathematisches Modell/Modelle festgelegt. Entscheidungen, die diese Bereiche betreffen, werden dann anhand des mathematischen Modells/der Modelle getroffen. Die entsprechenden Bereiche können damit als Datenmodelle, insbesondere in einer Steuer- und Auswerteeinheit abgelegt und schnell und effektiv im Hinblick auf auszuführende Entscheidungen abgearbeitet werden.

Die Aufgabe der Erfindung wird auch gelöst durch ein DIRCM-System nach Anspruch 10 zur Ausführung des erfindungsgemäßen Verfahrens, mit einer Schnittstelle zu einem Warnsystem zur Meldung anfliegender Ziele, mit mindestens zwei DIRCM-Modulen. Jedes der Module enthält eine Detektionseinheit zum Detektieren des Ziels in einem Detektionsmodus, und eine Verfolgeeinheit zum Verfolgen des Ziels in einem Verfolgemodus, und eine Strahleinheit zum Bekämpfen des Ziels in einem Strahlmodus. Jedes der Module weist einen Gesamtbereich zum Detektieren und/oder Verfolgen und/oder Bekämpfen von Zielen auf, und der Gesamtbereich enthält insbesondere einen Solobereich, in dem alleine das betreffende Modul zum Verfolgen und Bekämpfen verfügbar ist, und der Gesamtbereich enthält insbesondere einen Schnittbereich mit mindestens einem anderen der Module, in dem alle betreffenden Module zum Verfolgen und/oder Bekämpfen verfügbar sind. Ein Abwehrbereich ist die Vereinigungsmenge aller Gesamtbereiche. Das DIRCM-System enthält eine Steuer und Auswerteeinheit zur Ausführung der Verfahrensschritte des erfindungsgemäßen Verfahrens.

Das DIRCM-System und zumindest ein Teil dessen Ausführungsformen sowie die jeweiligen Vorteile wurden sinngemäß bereits im Zusammenhang mit dem erfindungsgemäßen Verfahren erläutert.

Der Detektionsmodus, der Strahlmodus und der Verfolgemodus sind unabhängig voneinander aktivierbar und deaktivierbar. Die Steuer- und Auswerteeinheit enthält insbesondere die oben genannten mathematischen Modelle bzw. eine entsprechende Einrichtung zur Realisierung und Verarbeitung der Modelle.

In einer bevorzugten Ausführungsform ist das Warnsystem als Teil des DIRCM-Systems in dieses systemtechnisch integriert, obschon es sich bei dem Warnsystem um ein nach wie vor eigenständiges System handeln kann.

In einer bevorzugten Ausführungsform enthält das DIRCM-System eine zumindest dem zweiten Modul übergeordnete Prädiktionseinheit, die dazu eingerichtet ist, die Bewegungsbahn zu ermitteln und/oder das Schneiden der Bewegungsbahn mit dem Rand des Gesamtbereiches gemäß Schritt C) festzustellen und/oder eine solche Feststellung entgegenzunehmen, und/oder gemäß Schritt C1) ein Modul als zweites Modul auszuwählen.

In einer bevorzugten Ausführungsform enthält das DIRCM-System einen schwenkbaren Detektionsbereich als Teilbereich des Gesamtbereiches. Damit sind die oben genannten Verfahrensvarianten umsetzbar.

In einer bevorzugten Ausführungsform ist das zweite Modul dazu ausgebildet, die ermittelte Bewegungsbahn und/oder Übergabeposition entgegenzunehmen und in Schritt C1) den Teilbereich entsprechend auszurichten und/oder nachzuführen. Damit sind die oben genannten Verfahrensvarianten umsetzbar.

In einer bevorzugten Ausführungsform ist das erste Modul dazu ausgebildet, gemäß Schritt C) die Bewegungsbahn und/oder die Übergabeposition - insbesondere wiederholt, insbesondere zyklisch - zu ermitteln und/oder zu aktualisieren. Damit sind die oben genannten Verfahrensvarianten umsetzbar.

In einer bevorzugten Ausführungsform ist die Schnittstelle eine Schnittstelle zu einem Warnsystem zur Meldung eines jeweiligen Anflugbereiches eines anfliegenden Zieles, bzw. ist das Warnsystem ein solches zur Ausgabe des Anflugbereiches.

In einer bevorzugten Ausführungsform sind wenigstens zwei der Module dazu eingerichtet, zum Bekämpfen des Ziels ein vorgebbares Signalmuster abzustrahlen, das einen Zeitverlauf aufweist, und die Module sind hinsichtlich des Zeitverlaufs phasensynchronisierbar bzw. im Betrieb bei Bedarf, wie oben beschrieben, phasensynchronisiert.

Die Aufgabe der Erfindung wird auch gelöst durch ein Objekt nach Anspruch 17, das vor einem anfliegenden Ziel zu schützen ist, mit einem erfindungsgemäßen DIRCM-System.

Das Objekt und zumindest ein Teil dessen Ausführungsformen sowie die jeweiligen Vorteile wurden sinngemäß bereits im Zusammenhang mit dem erfindungsgemäßen DIRCM-System und/oder dem erfindungsgemäßen Verfahren erläutert.

Insbesondere ist das Objekt ein Fahrzeug. Insbesondere ist das Fahrzeug ein Luft-, Land-, oder Seefahrzeug, ein Flugzeug oder ein Hubschrauber, insbesondere ein Transport- und/oder Passagier-Flugzeug oder -Hubschrauber.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: ein DIRCM-System bei der Bekämpfung eines anfliegenden Ziels,
- Figur 2: einen Zeitverlauf von Signalmustern zur Bestrahlung des Ziels,
- Figur 3: alternative Übergaben vom ersten zum zweiten Modul,
- Figur 4: eine weitere alternative Übergabe vom ersten zum zweiten Modul.

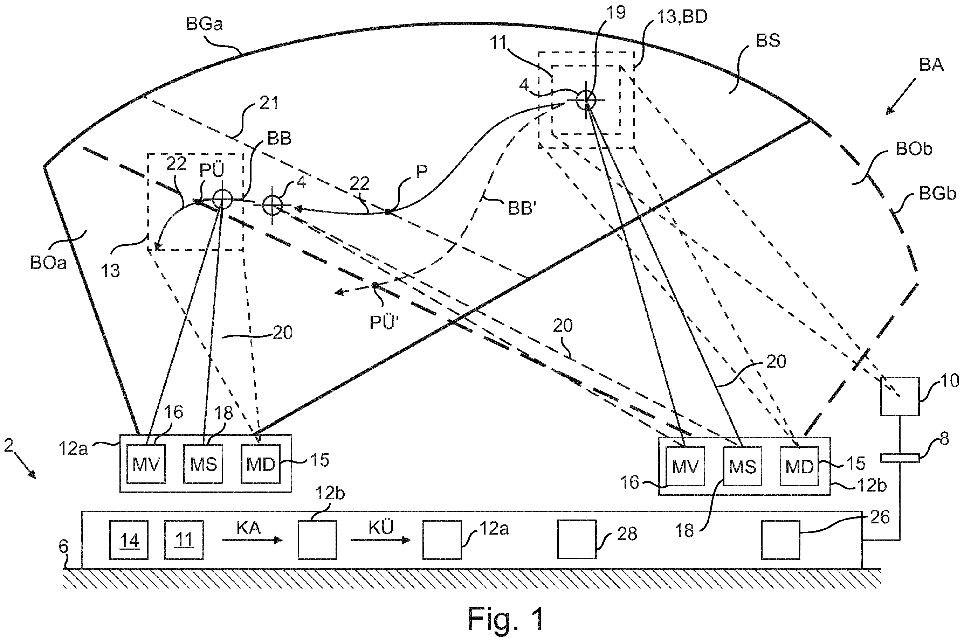

Figur 1 zeigt ein DIRCM-System 2 bei der Bekämpfung eines anfliegenden Ziels 4. Das System 2 ist auf bzw. an einem zu schützenden Objekt 6, hier einem nur symbolisch im Ausschnitt dargestellten Transportflugzeug, montiert. Das anfliegende Ziel 4 ist hier eine IR-gelenkte feindliche Rakete, die dafür vorgesehen ist, das Objekt 6 zu zerstören.

Das System 2 enthält eine Schnittstelle 8 zu einem Warnsystem 10, das ebenfalls am Objekt 6 angebracht ist. Das Warnsystem 10 dient zur Meldung anfliegender Ziele und ist hier ein MWS. Außerdem dient es zur Meldung eines jeweiligen Anflugbereiches 11 des jeweiligen Ziels. Der Anflugbereich 11 ist ein Grobbereich und gibt eine ungefähre Lage bzw. Richtung zum Ziel 4 an, eine exakte bzw. sichere Ortung bzw. Verfolgung des Ziels ist hierdurch jedoch nicht möglich. Insbesondere ist es daher nicht möglich, den IR-Suchkopf der Rakete zielgenau mit einem Laserstrahl 20 zu bestrahlen. Im Folgenden wird stellvertretend für die Gesamtheit aller potentiellen Ziele stets vom konkreten Ziel 4 gesprochen, um die Erfindung zu erläutern.

Das System 2 enthält außerdem zwei DIRCM-Module 12a,b, hier sogenannte Turrets, die am Transportflugzeug angebracht sind. Beide sind jeweils für sich dazu geeignet, das Ziel 4 in einem Detektionsmodus MD zu detektieren und in einem Verfolgemodus MV zielgenau zu orten und zu verfolgen, und in einem Strahlmodus MS mit dem Laserstrahl 20 zu bestrahlen und dadurch zu bekämpfen. Zur Ausführung des Detektionsmodus MD enthält jedes Modul 12a,b eine Detektionseinheit 15, zur Ausführung des Verfolgemodus MV eine Verfolgeeinheit 16 und zur Ausführung des Strahlmodus MS eine Strahleinheit 18. Diese Einheiten sind jeweils schwenkbar, um zielgerichtet ihre jeweiligen Tätigkeiten durchführen zu können. Die Detektionseinheit 15 weist daher auch einen schwenkbaren Teilbereich 13 als Detektionsbereich BD auf, innerhalb dessen ein Ziel 4 vom betreffenden Modul 12a,b detektiert bzw. akquiriert werden kann. Die Verfolgeeinheit 16 orientiert sich ebenfalls am Teilbereich 13, um darin das Ziel 4 definitiv zu orten und den Teilbereich 13 dem Ziel 4 bei Bewegung nachzuführen. Ebenso wird die Mitte des Teilbereiches 13 mitverschwenkt, die den Zielpunkt 19 für den Laserstrahl 20 der Strahleinheit 18 darstellt. Das Ziel 4 kann durch die Module 12a,b detektiert werden, um dessen Anwesenheit im Teilbereich 13 überhaupt festzustellen, und verfolgt werden, d. h. so genau geortet werden, dass mit Hilfe der Strahleinheit 18 ein Laserstrahl 20 in den IR-Suchkopf des Ziels 4 eingestrahlt werden kann, um das Ziel 4 dadurch zu bekämpfen, dass das Ziel 4 vom Objekt 6 weggelenkt wird. Dank dieser zielgenauen Ortung gelingt also das gezielte Einstrahlen eines Laserstrahls 20 in den IR-Suchkopf der Rakete.

Jedem der Module 12a,b ist ein jeweiliger Gesamtbereich BGa,b zugeordnet, in dem das jeweilige Modul 12a,b in der Lage ist, das Ziel 4 zu detektieren, zu verfolgen und zu bekämpfen. Der jeweilige Gesamtbereich BGa,b setzt sich aus allen möglichen Positionen zusammen, die durch die Verschwenkbarkeit der Komponenten, also des Teilbereiches 13 / Verschwenken des Detektionsbereiches BD / des Trackingbereiches der Verfolgeeinheit 16 und des Zielpunktes 19 für den Laserstrahl 20 erreichbar sind. Zur Verdeutlichung sind in Figur 1 die Ränder der Gesamtbereiche BGa,b verdickt und für BGa ausgezogen und für BGb gestrichelt dargestellt. Jeder der Gesamtbereiche BGa,b enthält wiederum einen Solobereich BOa,b. Im Solobereich BOa ist lediglich das Modul 12a in der Lage, das Ziel 4 zu detektieren, zu verfolgen und zu bekämpfen, im Solobereich BOb lediglich das Modul 12b. In einem Schnittbereich BS sind beide Module 12a,b in der Lage, das Ziel 4 zu detektieren, zu verfolgen und zu bekämpfen. Ein Abwehrbereich BA ist durch die Vereinigungsmenge der Gesamtbereiche BGa,b gebildet; in diesem ist eine Detektion, Verfolgung und Abwehr des Ziels 4 durch mindestens eines der Module 12a,b bzw. durch das System 2 möglich.

Das System 2 enthält außerdem eine Steuer- und Auswerteeinheit 14, die dazu eingerichtet ist, folgendes Verfahren zur Bekämpfung des anfliegenden Ziels 4 durch das System 2 durchzuführen:
Zunächst fliegt kein Ziel 4 das Objekt 6 an. Das System 2 befindet sich daher zunächst in Bereitschaft. Beide Module 12a,b sind deaktiviert. Das Warnsystem 10 überwacht das Objekt 6 auf anfliegende Ziele 4. Zu einem bestimmten Zeitpunkt meldet das Warnsystem 10 über die Schnittstelle 8 das anfliegende Ziel 4 und zusätzlich dessen Anflugbereich 11. Da nun das Ziel 4 vom Warnsystem 10 gemeldet wird, wird gemäß dem Verfahren genau eines der Module 12a,b als aktives Modul gewählt und bei diesem der Detektionsmodus MD, der Verfolgemodus MV und der Strahlmodus MS für das Ziel 4 aktiviert. Die Auswahl erfolgt hierbei durch ein Auswahlkriterium KA. Im vorliegenden Fall besteht das Auswahlkriterium KA darin, dasjenige der Module 12a,b auszuwählen, welches dem Ziel 4 am nächsten ist, vorliegend also das Modul 12b.

Anhand des Anflugbereiches 11 wird das Modul 12b bzw. dessen bewegliche Komponenten und so der Teilbereich 13 auf den Anflugbereich 11 eingeschwenkt. Im Teilbereich 13 wird das Ziel 4 durch die Detektionseinheit 15 detektiert. Anschließend wird das Ziel 4 wird durch das Modul 12b bzw. die Verfolgeeinheit 16 verfolgt und durch Einstrahlen des Laserstrahls 20 aus der Strahleinheit 18 in den IR-Suchkopf des Ziels 4 bekämpft, um das Ziel 4 vom Objekt 6 wegzulenken. Zur Verfolgung wird der Teilbereich 13 bzw. dessen Mitte als Zielpunkt 19 des Laserstrahls 20 dem Ziel 4 im Rahmen eines Tracking durch die aktivierte Verfolgeeinheit 16 nachgeführt.

Fortan ermittelt bzw. prädiziert eine hier nur symbolisch angedeutete Prädiktionseinheit 28 des DIRCM-Systems 2, wiederholt und zyklisch eine zu erwartende zukünftige Bewegungsbahn BB des Ziels 4. Die Prädiktionseinheit 28 ermittelt auch, ob die Bewegungsbahn BB den Rand des Gesamtbereiches BGb des aktuellen ersten Moduls 12b an einer Übergabeposition PÜ schneidet. Dabei bleiben zunächst beim derzeit aktiven Modul 12b der Verfolgemodus MV und der Strahlmodus MS aktiviert.

In einer nicht dargestellten Alternative ist je eine Prädiktionseinheit 28 in den Modulen 12a,b integriert. Die o. g. Ermittlungen der Bewegungsbahn BB und der Übergabeposition PÜ werden dann vorliegend durch das Modul 12b durchgeführt.

Eine erste Prädiktion der Bewegungsbahn BB' und der Übergabeposition PÜ' ist gestrichelt angedeutet. Im Laufe der Zeit bewegt sich das Ziel jedoch auf der abweichenden ausgezogenen Linie entlang des Pfeils 22, so dass sich zu einem späteren Zeitpunkt die revidierte ausgezogene zu erwartende Bewegungsbahn BB und Übergabeposition PÜ ergeben.

Vorliegend wird weiterhin permanent ein Übergabekriterium KÜ überwacht bzw. geprüft. Vorliegend ist das Übergabekriterium KÜ, dass das Ziel 4 eine Grenzfläche 21 erreicht. Diese definiert das Unterschreiten eines Mindestabstandes des Ziels 4 vom Rand des Gesamtbereiches BGb. Im weiteren Verlauf der Situation bewegt sich das Ziel 4 - wie durch den Pfeil 22 dargestellt - im Abwehrbereich BA weiter. Am Punkt P erreicht das Ziel 4 tatsächlich die Grenzfläche 21.

Daraufhin wird das aktive Modul 12b als erstes Modul und das andere Modul 12a als zweites Modul gewählt, welches alternativ zum Verfolgen und Bestrahlen des Ziels 4 fähig wäre bzw. ist. Gemäß dem Verfahren wird nun wie folgt auf das andere Modul 12a übergeben.

Beim zweiten Modul 12a wird der Teilbereich 13 auf die aktuelle Position der Übergabeposition PÜ eingeschwenkt und der Detektionsmodus MD aktiviert. Dabei bleiben weiterhin beim ersten Modul 12b der Verfolgemodus MV und der Strahlmodus MS aktiviert.

Sobald das Ziel vom Modul 12a detektiert ist, wird der Verfolgemodus MV und der Strahlmodus MS beim ersten, derzeit aktiven Modul 12b deaktiviert. Anschließend wird das zweite Modul 12a zum aktiven Modul und dessen Verfolgemodus MV und Strahlmodus MS werden aktiviert. Abschließen wird das Modul 12a zum ersten Modul erklärt.

Das Ziel 4 bewegt sich anschließend im Solobereich BOa, weshalb die prädizierte Bewegungsbahn BB keinen weiteren Schnittpunkt mit der Grenze des Gesamtbereiches BGa liefert. Auch in diesem Solobereich BOa bleibt gemäß der obigen Verfahrensbedingung das derzeit aktive Modul 12a hinsichtlich Verfolgemodus MV und Strahlmodus MS aktiviert. Schlussendlich ist die Bekämpfung erfolgreich und das Ziel 4 dreht vom Objekt 6 ab.

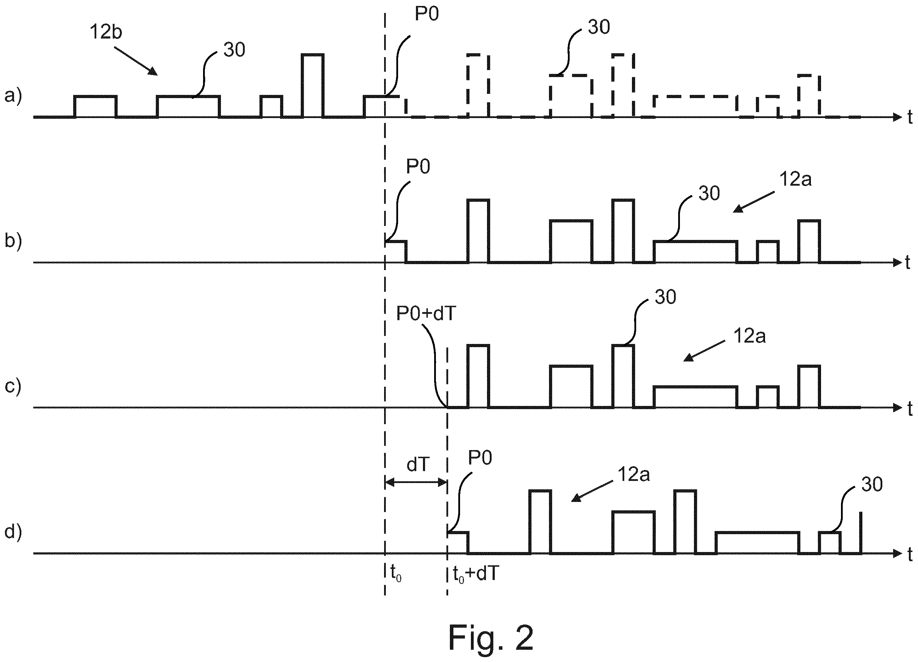

Figur 2 zeigt nur beispielhaft und schematisch im Verlauf über der Zeit t ein Signalmuster 30, gemäß dem der Laserstrahl 20 ausgesendet bzw. in seiner Amplitude moduliert wird, um das Ziel 4 abzulenken. Figur 2a zeigt dabei den Soll-Verlauf des Signalmusters 30 über einen längeren Zeitraum.

In Bezug auf die Situation gemäß Figur 1 erzeugt zunächst das Modul 12b den Laserstrahl 20 gemäß Figur 2a. Das Ziel 4 wird zum Zeitpunkt t0 auf das Modul 12a übergeben, so dass der Laserstrahl 20 ab diesem Zeitpunkt t0 nicht mehr vom Modul 12b, sondern gemäß Fig. 2b vom Modul 12a abgestrahlt wird. Die Signalmuster 30 der Laserstrahlen 20 der Module 12a,b sind hierbei phasen- bzw. bitsynchronisiert. In einer ersten Variante endet die Bestrahlung durch das Modul 12b bei Phase P0 des gesamten Signalverlaufs nach Fig. 2a, die Bestrahlung des Moduls 12a wird bei Phase P0 fortgesetzt. Im Ergebnis wird das Ziel 4 dauerhaft mit dem durchgehenden Signalmuster 30 gemäß Fig. 2a (ausgezogener und gestrichelter Abschnitt) bestrahlt, da der ausgezogene Signalabschnitt in Fig. 2b exakt dem gestrichelten in Fig. 2a entspricht.

Für den Fall, dass der Umschaltvorgang zwischen der Bestrahlung durch die Module 12a,b eine Zeitdauer dT in Anspruch nimmt, existieren in einer zweiten Alternative nochmals zwei Varianten der Phasensynchronisierung:
Gemäß einer ersten Variante und Fig. 2a,c endet die Bestrahlung des Ziels durch das Modul 12b bei der Phase P0. Dann erfolgt während der Zeitdauer dT keine Bestrahlung des Ziels 4; dessen Bestrahlung wird jedoch mit der Phase P0+dT wieder aufgenommen. Im Ergebnis wird das Ziel 4 mit einem lückenhaften Signalmuster 30, das prinzipiell gemäß Figur 2a verläuft, bestrahlt, wobei eine Lücke zwischen den Phasen P0 und P0+dT verbleibt, in der keine Bestrahlung erfolgt bzw. dieser Abschnitt des Signalverlaufs ausgelassen wird. Der "Code" gemäß Fig. 2a wird also zwar in zeitlich "durchgängigem" Ablauf, aber nicht vollständig, d. h. lückenhaft auf das Ziel 4 eingestrahlt.

Gemäß einer zweiten Variante nach Fig. 2a,d wird die Bestrahlung zum Zeitpunkt t0+dT vom Modul 12a mit der Phase P0 fortgesetzt, bei der die Bestrahlung des Moduls 12b endete. Demgemäß wird das Ziel 4 mit dem vollständigen Signalmuster 30 gemäß Fig. 2a bestrahlt, jedoch wird das Signalmuster 30 für die Zeitdauer dT pausiert bzw. zeitlich gestreckt oder gedehnt. Der "Code" gemäß Fig. 2a wird - wenn auch mit einer zeitlichen Lücke dT - vollständig auf das Ziel 4 eingestrahlt.

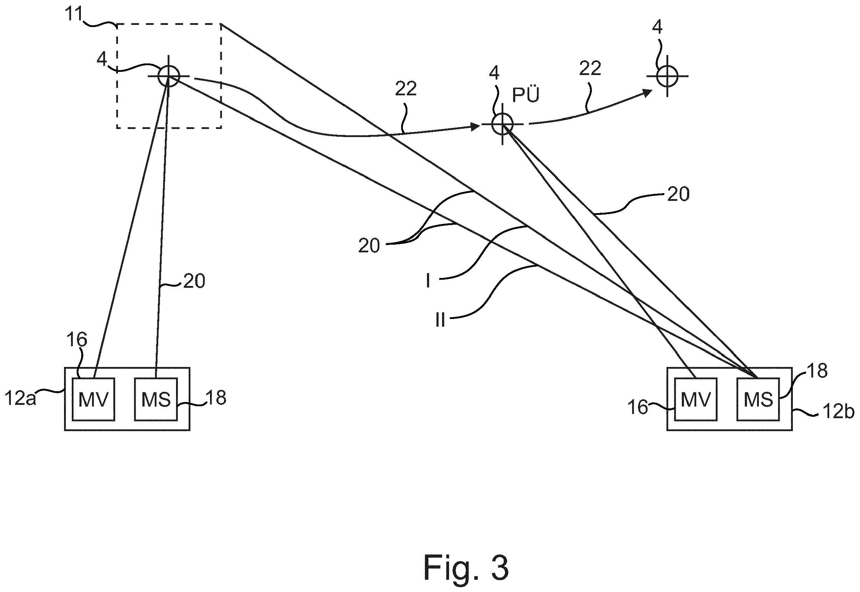

Figur 3 zeigt einen Ausschnitt aus dem System 2 und eine alternative Bekämpfungs-Situation und alternative Varianten der Übergabe im Schnittbereich BS zwischen den Modulen 12a und 12b. Das Ziel 4 wandert hierbei entlang des Pfeils 22 und wird zunächst vom aktiven ersten Modul 12a verfolgt und bestrahlt. Nach Detektion einer Übergabeposition, jedoch noch vor Erreichen der Übergabeposition PÜ (dort Erfüllung des Übergabekriteriums KÜ und erfolgreiche Detektion durch das Modul 12b) - hier ab einem frühestmöglichen Zeitpunkt, an dem das Modul 12b dazu bereit ist - wird beim zweiten Modul 12b der Strahlmodus MS, nicht jedoch der Verfolgemodus MV aktiviert. Anhand des vom Warnsystem 10 gemeldeten Anflugbereiches 11 zielt das Modul 12b bewusst am Ziel 4 vorbei, in dem es hier auf dessen Rand zielt (Situation I in Fig. 3).

Für den alternativen Fall, dass eine Phasensynchronisierung der Signalmuster 30 gemäß Figur 2 stattfindet, wäre dies ebenso möglich (Situation I), aber in einer hier gezeigten Variante zielt das Modul 12b ebenfalls - zumindest grob - auf das Ziel 4 anhand des Anflugbereiches 11, indem es auf das Zentrum des Anflugbereiches 11 zielt (alternative Situation II in Fig. 3). Aufgrund der Phasensynchronisierung sind beide Signalmuster 30 zeitgleich, so dass keine gegenseitige Auslöschung der Laserstrahlen 20 im Ziel 4, sondern deren Addition hinsichtlich des Signalmusters 30 stattfindet.

An der Übergabeposition PÜ wird dann das Modul 12a vollständig (Verfolgemodus MV und Strahlmodus MS) deaktiviert und der Verfolgemodus MV für das Modul 12b gestartet. Für den Fall des vorherigen Vorbeizielens wird außerdem der Laserstrahl 20 dann auf das Ziel 4 eingeschwenkt, was aufgrund des aktivierten Verfolgemodus MV im Modul 12b nun zielgenau möglich ist.

Um die entsprechenden Entscheidungen bezüglich der genannten Bereiche treffen zu können, ist in einer alternativen Ausführungsform in der Steuer- und Auswerteeinheit 14 ein mathematisches Modell 26 der Bereiche BGa,b, BOa,b, BS und BA und des Teilbereiches 13 vorhanden. Auch das Ziel 4 sowie Bewegungsbahn BB und Übergabeposition PÜ werden dann im entsprechenden Modell 26 als virtuelles Ziel usw. verortet. Entscheidungen, ob und wo sich das Ziel 4 in den betreffenden Bereichen befindet, ob Kriterien KA, KÜ erfüllt sind oder nicht, usw. werden dann - wo nötig - anhand des Modells 26 getroffen.

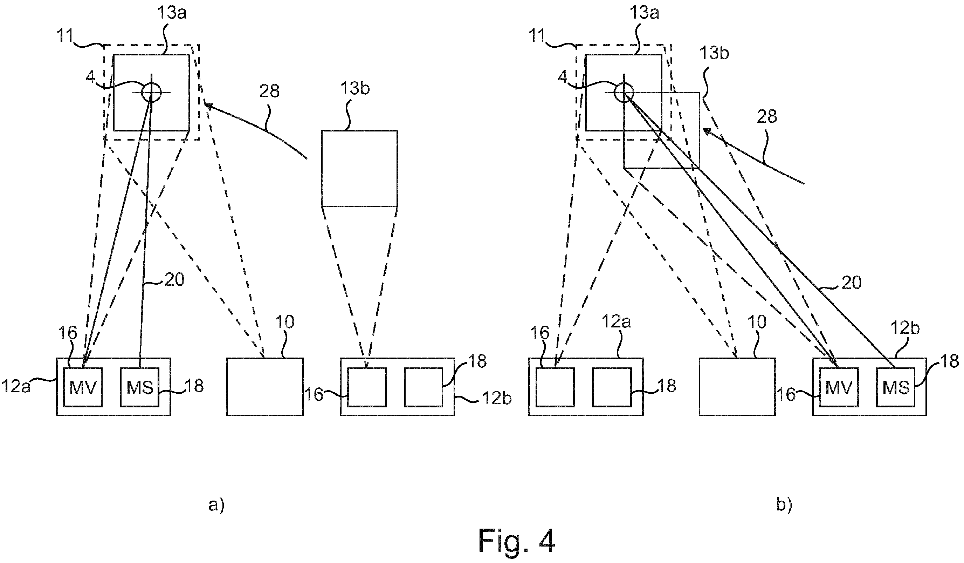

Figur 4 illustriert folgende Variante zur Übergabe des Ziels 4 bzw. des Verfolgemodus MV und Strahlmodus MS vom ersten Modul 12a auf das zweite Modul 12b. In Fig. 4a wird das Ziel 4 vom Modul 12a erfolgreich verfolgt (aktivierter Verfolgemodus MV), d. h. zielgenau geortet (symbolisiert durch das Kreuz auf dem Ziel). Außerdem wird es vom Modul 12a im Strahlmodus MS erfolgreich bestrahlt. Das Modul 12b ist deaktiviert (Verfolgemodus MV und Strahlmodus MS deaktiviert). In Fig. 4a sind auch die Teilbereiche 13a,b der Module 12a,b bzw. von deren Verfolgeeinheiten 16 dargestellt. Sobald sich das Ziel 4 anfänglich innerhalb eines solchen Erfassungsbereiches 13a,b der Module 12a,b befindet, kann bei Aktivierung des Verfolgemodus MV das Ziel exakt im jeweiligen Zielbereich erfasst werden (Kreuzmarkierung).

Das Warnsystem 10 liefert parallel dazu den (groben) Anflugbereich 11 des Ziels 4. Dieser Anflugbereich 11 wird nun genutzt, um das zweite Modul 12b - bei weiterhin deaktiviertem Verfolgemodus MV und Strahlmodus MS - so weit auf das Ziel einzuschwenken, dass das Ziel in den Erfassungsbereich 13b des Moduls 12b bzw. von dessen Verfolgeeinheit 16 gelangt. Das Einschwenken ist durch den Pfeil 28 dargestellt. Derzeit ist die Verfolgeeinheit 16 noch nicht weit genug auf das Ziel 4 eingeschwenkt. Deren Erfassungsbereich 13b ist noch vom Ziel 4 entfernt. Ein Aktivieren des Verfolgemodus MV beim Modul 12b könnte noch nicht zum erfolgreichen Verfolgen durch das Modul 12b führen.

In Figur 4b ist das Einschwenken des zweiten Moduls 12b soweit fortgeschritten, dass das Ziel 4 in den Erfassungsbereich 13b eintritt. Ab diesem Moment kann das Aktivieren des Detektionsmodus MD und des Verfolgemodus MV beim Modul 12b zur erfolgreichen zielgenauen Erfassung des Ziels 4, d. h. erfolgreichem Verfolgen führen.

Daher wird nun das Modul 12a deaktiviert (Verfolgemodus MV und Strahlmodus MS) und anschließend das Modul 12b aktiviert (Verfolgemodus MV und Strahlmodus MS). Damit ist das Ziel 4 an das Modul 12b übergeben.

### Bezugszeichenliste

- 2: System (DIRCM-)
- 4: Ziel
- 6: Objekt
- 8: Schnittstelle
- 10: Warnsystem
- 11: Anflugbereich
- 12a,b: Modul (DIRCM-)
- 13,13a,b: Teilbereich
- 14: Steuer- und Auswerteeinheit
- 15: Detektionseinheit
- 16: Verfolgeeinheit
- 18: Strahleinheit
- 19: Zielpunkt
- 20: Laserstrahl
- 21: Grenzfläche
- 22: Pfeil
- 26: Modell
- 28: Prädiktionseinheit
- 30: Signalmuster
- BGa,b: Gesamtbereich
- BOa,b: Solobereich
- BS: Schnittbereich
- BA: Abwehrbereich
- BD: Detektionsbereich
- BB: Bewegungsbahn
- MV: Verfolgemodus
- MS: Strahlmodus
- MD: Detektionsmodus
- KA: Auswahlkriterium
- KÜ: Übergabekriterium
- P: Punkt
- PÜ: Übergabeposition
- t: Zeit
- t0: Zeitpunkt
- P0: Phase
- dT: Zeitdauer

## Patentansprüche

1. Verfahren zur Bekämpfung eines anfliegenden Ziels (4) durch ein DIRCM-System (2), wobei das DIRCM-System (2) enthält:
- eine Schnittstelle (8) zu einem Warnsystem (10) zur Meldung anfliegender Ziele (4),
- mindestens zwei DIRCM-Module (12a,b) zum Detektieren des Ziels (4) in einem Detektionsmodus (MD) und zum Verfolgen des Ziels (4) in einem Verfolgemodus (MV) und zum Bekämpfen durch Bestrahlen des Ziels (4) in einem Strahlmodus (MS),
- wobei jedes der Module (12a,b) einen Gesamtbereich (BGa,b) zum Detektieren und/oder Verfolgen und/oder Bekämpfen von Zielen (4) aufweist,
- wobei ein Abwehrbereich (BA) die Vereinigungsmenge aller Gesamtbereiche (BGa,b) ist,
bei dem:
- A) wenn das Ziel (4) vom Warnsystem (10) gemeldet wird:
- genau eines der Module (12a,b) als aktives erstes Modul (12a,b) gewählt wird und bei diesem der Verfolgemodus (MV) und der Strahlmodus (MS) für das Ziel (4) aktiviert werden,
und fortan:
- B) für das aktive Modul (12a,b):
- bei dem aktiven Modul (12a,b) der Verfolgemodus (MV) und der Strahlmodus (MS) aktiviert bleiben,
- und Verfolgemodus (MV) und Strahlmodus (MS) bei allen anderen Modulen (12a,b) für das Ziel (4) deaktiviert bleiben,
- und eine zu erwartende zukünftige Bewegungsbahn (BB) des Ziels (4) ermittelt wird; und
- C) wenn die Bewegungsbahn (BB) einen Rand des Gesamtbereiches (BGa,b) des aktiven Moduls (12a,b) an einer Übergabeposition (PÜ) schneidet:
- C1) ein zweites Modul (12a,b) gewählt wird, für das die Übergabeposition (PÜ) in dessen Gesamtbereich (BGa,b) liegt, und beim zweiten Modul (12a,b) der Detektionsmodus (MD) aktiviert wird oder bleibt,
- C2) und beim ersten Modul (12a,b) der Verfolgemodus (MV) und der Strahlmodus (MS) aktiviert bleiben; und
- D) nachdem das zweite Modul (12a,b) das Ziel (4) detektiert hat:
- D1) beim ersten Modul (12a,b) der Verfolgemodus (MV) deaktiviert wird und nach erfolgter Deaktivierung der Verfolgemodus (MV) des zweiten Moduls (12a,b) aktiviert wird,
- D2) der Strahlmodus (MS) beim ersten Modul (12a,b) deaktiviert wird und beim zweiten Modul (12a,b) aktiviert wird oder bleibt,
- D3) das zweite Modul (12a,b) zum ersten Modul (12a,b) erklärt wird.

2. Verfahren nach Anspruch 1,
**dadurch gekennzeichnet,**
**dass** in Schritt C1):
- im Detektionsmodus (MD) ein verschwenkbarer Detektionsbereich als Teilbereich (13) des Gesamtbereiches (BGa,b) auf das Ziel (4) hin überwacht wird, und
- der Teilbereich (13) abhängig von der Bewegungsbahn (BB) und/oder der Übergabeposition (PÜ) auf die Bewegungsbahn (BB) und/oder die Übergabeposition (PÜ) hin ausgerichtet und/oder nachgeführt wird, wobei dies unabhängig vom Ziel (4) ist.

3. Verfahren nach einem der vorhergehenden Ansprüche,
**dadurch gekennzeichnet,**
**dass** in Schritt A) das aktive Modul (12a,b) nach einem Auswahlkriterium (KA) gewählt wird.

4. Verfahren nach Anspruch 3,
**dadurch gekennzeichnet,**
**dass** als Auswahlkriterium (KA) genutzt wird:
- bei dem Ziel (4) in einem Solobereich (BOa,b) des Gesamtbereiches (BGa,b):
- das zugehörige Modul (12a,b) zum Solobereich (BOa,b),
- bei dem Ziel (4) in einem Schnittbereich (BS) mindestens zweier Gesamtbereiche (BGa,b): das Modul (12a,b) aus denen des Schnittbereiches (BS):
- in einem vorgebaren Entfernungsbereich zum Ziel (4),
- mit der wenigsten Abweichung der aktuellen Verfolgung und/oder Bekämpfung von einer Mittelstellung bezüglich eines Verfolgungs- und/oder Bekämpfungsbereiches des Moduls (12a,b),
- mit einem vorgebbaren Gesamtbereich (BGa,b),
- mit einer vorgebbaren Erfolgsprognose zur erfolgreichen Bekämpfung.

5. Verfahren nach einem der vorhergehenden Ansprüche,
**dadurch gekennzeichnet,**
**dass** Schritt D) nur bei Erfüllung eines Übergabekriteriums (KÜ) ausgeführt wird, und das Übergabekriterium (KÜ) bei Nichterfüllung weiterhin geprüft wird.

6. Verfahren nach Anspruch 5,
**dadurch gekennzeichnet,**
**dass** als Übergabekriterium (KÜ) genutzt wird:
- **dass** das zweite Modul (12a,b) zu einer erfolgreichen Zielverfolgung und/oder - bestrahlung bereit wird,
- **dass** ein vorgebbarer Grenzparameter beim ersten (12a,b) und/oder zweiten Modul (12a,b) erreicht ist,
- **dass** das erste Modul (12a,b) das Ziel (4) nicht mehr erfolgreich verfolgt und/oder bestrahlt,
- **dass** das Ziel (4) eine vorgebbare Grenzfläche (21) im Gesamtbereich (BGa,b) erreicht,
- **dass** das Ziel (4) eine vorgebbare Entfernung zum Rand des Gesamtbereiches (BGa,b) unterschreitet,
- **dass** das Ziel (4) den Gesamtbereich (BGa,b) an der Grenze verlässt.

7. Verfahren nach einem der vorhergehenden Ansprüche,
**dadurch gekennzeichnet,**
**dass** wenigstens das erste (12a,b) und zweite Modul (12a,b) zum Bekämpfen des Ziels (4) ein vorgebbares Signalmuster abstrahlen, das einen Zeitverlauf aufweist, und im oder vor dem Schritt D2) die Signalmuster des ersten (12a,b) und zweiten Moduls (12a,b) hinsichtlich des Zeitverlaufs phasensynchronisiert werden.

8. Verfahren nach einem der vorhergehenden Ansprüche,
**dadurch gekennzeichnet, dass**
- in oder nach Schritt C1) beim zweiten Modul (12a,b) der Strahlmodus (MS), nicht aber der Verfolgemodus (MV), aktiviert wird, wobei vom zweiten Modul (12a,b) zumindest nicht auf das Ziel (4) gezielt oder bewusst am Ziel (4) vorbeigezielt oder wird,
- in Schritt D2) der Strahlmodus (MS) beim zweiten Modul (12a,b) aktiviert bleibt und vom zweiten Modul (12b) bewusst auf das Ziel (4) gezielt wird.

9. Verfahren nach einem der vorhergehenden Ansprüche,
**dadurch gekennzeichnet,**
**dass** wenigstens einer oder mehrere oder alle der Bereiche - falls vorhanden - Gesamt-, Solo-, Schnitt-, Detektions-, Teil- und Abwehrbereich (BGa,b; BOa,b; BS; BD; BA) in einem Koordinatensystem als mathematisches Modell (26) festgelegt werden und Entscheidungen, die diese Bereiche (BGa,b; BOa,b; BS; BD; BA) betreffen, anhand des mathematischen Modells (26) getroffen werden.

10. DIRCM-System (2) zur Ausführung des Verfahrens nach einem der vorhergehenden Ansprüche, mit
- einer Schnittstelle (8) zu einem Warnsystem (10) zur Meldung anfliegender Ziele (4),
- mindestens zwei DIRCM-Modulen (12a,b) mit einer Detektionseinheit (15) zum Detektieren des Ziels (4) in einem Detektionsmodus (MD) und mit einer Verfolgeeinheit (16) zum Verfolgen des Ziels (4) in einem Verfolgemodus (MV) und mit einer Strahleinheit (18) zum Bekämpfen des Ziels (4) in einem Strahlmodus (MS),
- wobei jedes der Module (12a,b) einen Gesamtbereich (BGa,b) zum Detektieren und/oder Verfolgen und/oder Bekämpfen von Zielen (4) aufweist,
- wobei ein Abwehrbereich (BA) die Vereinigungsmenge aller Gesamtbereiche (BGa,b) ist,
- mit einer zumindest dem zweiten Modul (12a,b) übergeordneten Prädiktionseinheit (28), die dazu eingerichtet ist, die Bewegungsbahn (BB) zu ermitteln und/oder das Schneiden der Bewegungsbahn (BB) mit dem Rand des Gesamtbereiches (BGa,b) gemäß Schritt C) festzustellen und/oder eine solche Feststellung entgegenzunehmen, und/oder gemäß Schritt C1) ein Modul (12a,b) als zweites Modul (12a,b) auszuwählen, und
- mit einer Steuer- und Auswerteeinheit (14) ausgelegt zur Ausführung der Verfahrensschritte des Verfahrens nach einem der vorhergehenden Ansprüche.

11. DIRCM-System (2) nach Anspruch 10,
**dadurch gekennzeichnet,**
**dass** das DIRCM-System (2) enthält:
- einen schwenkbaren Detektionsbereich (BD) als Teilbereich (13) des Gesamtbereiches (BGa,b).

12. DIRCM-System (2) nach Anspruch 11,
**dadurch gekennzeichnet,**
**dass** das zweite Modul (12a,b) dazu ausgebildet ist, die ermittelte Bewegungsbahn (BB) und/oder Übergabeposition (PÜ) entgegenzunehmen und in Schritt C1) den Teilbereich (13) entsprechend auszurichten und/oder nachzuführen.

13. DIRCM-System (2) nach einem der Ansprüche 10 bis 12,
**dadurch gekennzeichnet,**
**dass** das erste Modul (12a,b) dazu ausgebildet ist, gemäß Schritt C) die Bewegungsbahn (BB) und/oder die Übergabeposition (PÜ) zu ermitteln und/oder zu aktualisieren.

14. DIRCM-System (2) nach einem der Ansprüche 10 bis 13,
**dadurch gekennzeichnet,**
**dass** die Schnittstelle (8) eine Schnittstelle (8) zu einem Warnsystem (10) zur Meldung eines jeweiligen Anflugbereiches (11) eines anfliegenden Zieles (4) ist.

15. DIRCM-System (2) nach einem der Ansprüche 10 bis 14,
**dadurch gekennzeichnet,**
**dass** wenigstens zwei der Module (12a,b) dazu eingerichtet sind, zum Bekämpfen des Ziels (4) ein vorgebbares Signalmuster (30) abzustrahlen, das einen Zeitverlauf aufweist, und die Module (12a,b) hinsichtlich des Zeitverlaufs phasensynchronisierbar sind.

## Claims

1. Method for combating an approaching target (4) by way of a DIRCM system (2), the DIRCM system (2) containing:
- an interface (8) to a warning system (10) for reporting approaching targets (4),
- at least two DIRCM modules (12a,b) for detecting the target (4) in a detection mode (MD) and for tracking the target (4) in a tracking mode (MV) and for combating, by irradiating, the target (4) in a ray mode (MS),
- each of the modules (12a,b) having a total area (BGa,b) for detecting and/or tracking and/or combating targets (4),
- a defence area (BA) being the union of all total areas (BGa,b),
in which:
- A) when the target (4) is reported by the warning system (10):
- precisely one of the modules (12a,b) is selected as the active first module (12a,b) and the tracking mode (MV) and the ray mode (MS) are activated for the target (4) in said active first module,
and from then on:
- B) for the active module (12a,b):
- the tracking mode (MV) and the ray mode (MS) remain activated in the active module (12a,b),
- and the tracking mode (MV) and the ray mode (MS) remain deactivated for the target (4) in all other modules (12a,b),
- and an anticipable future path of movement (BB) of the target (4) is determined; and
- C) if the path of movement (BB) intersects an edge of the total area (BGa,b) of the active module (12a,b) at a transfer position (PU):
- C1) a second module (12a,b), for which the transfer position (PU) is located in the total area (BGa,b) thereof, is selected and the detection mode (MD) is or remains activated in the second module (12a,b),
- C2) and the tracking mode (MV) and the ray mode (MS) remain activated in the first module (12a,b); and
- D) after the second module (12a,b) has detected the target (4):
- D1) the tracking mode (MV) is deactivated in the first module (12a,b) and the tracking mode (MV) of the second module (12a,b) is activated after deactivation has taken place,
- D2) the ray mode (MS) is deactivated in the first module (12a,b) and is or remains activated in the second module (12a,b),
- D3) the second module (12a,b) is declared the first module (12a,b).

2. Method according to Claim 1,
**characterized**
**in that** in step C1):
- a pivotable detection area, as a subarea (13) of the total area (BGa,b), is monitored for the target (4) in the detection mode (MD), and
- the subarea (13) is aligned with and/or repositioned for the path of movement (BB) and/or the transfer position (PU) on the basis of the path of movement (BB) and/or the transfer position (PU), this being independently of the target (4).

3. Method according to either of the preceding claims,
**characterized**
**in that** in step A) the active module (12a,b) is selected according to a selection criterion (KA).

4. Method according to Claim 3,
**characterized**
**in that** the selection criterion (KA) used is:
- when the target (4) is in a solo area (BOa,b) in the total area (BGa,b):
- the associated module (12a,b) in respect of the solo area (BOa,b),
- when the target (4) is at an intersection (BS) between at least two total areas (BGa,b): the module (12a,b) from the modules relating to the intersection (BS):
- at a predefinable distance range from the target (4),
- with the least deviation of the present tracking and/or combat from a central position vis-à-vis a tracking and/or combat area of the module (12a,b),
- with a predefinable total area (BGa,b),
- with a predefinable forecast of success in respect of successful combat.

5. Method according to one of the preceding claims,
**characterized**
**in that** step D) is carried out only if a transfer criterion (KU) is satisfied, and the transfer criterion (KU) continues to be checked if not satisfied.

6. Method according to Claim 5,
**characterized**
**in that** the transfer criterion (KU) used is:
- that the second module (12a,b) is ready for successful target tracking and/or irradiation,
- that a predefinable border parameter is reached in the first (12a,b) and/or second (12a,b) module,
- that the first module (12a,b) is no longer successfully tracking and/or irradiating the target (4),
- that the target (4) reaches a predefinable boundary (21) in the total area (BGa,b),
- that the target (4) is less than a predefinable distance from the edge of the total area (BGa,b),
- that the target (4) leaves the total area (BGa,b) at the border.

7. Method according to one of the preceding claims,
**characterized**
**in that** at least the first (12a,b) and second (12a,b) modules combat the target (4) by emitting a predefinable signal pattern that has a time characteristic, and the time characteristics of the signal patterns of the first (12a,b) and second (12a,b) modules are phase-synchronized in or before step D2).

8. Method according to one of the preceding claims, **characterized in that**
- the ray mode (MS), but not the tracking mode (MV), is activated in the second module (12a,b) in or after step C1), the second module (12a,b) at least not aiming for the target (4) or deliberately aiming past the target (4),
- the ray mode (MS) remains activated in the second module (12a,b) in step D2) and the second module (12b) deliberately aims at the target (4).

9. Method according to one of the preceding claims,
**characterized**
**in that** at least one or more or all of the areas - if present - total area, solo area, intersection, detection area, subarea and defence area (BGa,b; BOa,b; BS; BD; BA) are defined as a mathematical model (26) in a coordinate system, and decisions relating to these areas (BGa,b; BOa,b; BS; BD; BA) are taken on the basis of the mathematical model (26).

10. DIRCM system (2) for carrying out the method according to one of the preceding claims, having
- an interface (8) to a warning system (10) for reporting approaching targets (4),
- at least two DIRCM modules (12a,b) having a detection unit (15) for detecting the target (4) in a detection mode (MD) and having a tracking unit (16) for tracking the target (4) in a tracking mode (MV) and having a ray unit (18) for combating the target (4) in a ray mode (MS),
- each of the modules (12a,b) having a total area (BGa,b) for detecting and/or tracking and/or combating targets (4),
- a defence area (BA) being the union of all total areas (BGa,b),
- having a prediction unit (28) that is superordinate to at least the second module (12a,b) and that is configured to determine the path of movement (BB) and/or to ascertain the intersection of the path of movement (BB) with the edge of the total area (BGa,b) in accordance with step C) and/or to receive such an ascertainment, and/or to select a module (12a,b) as the second module (12a,b) in accordance with step C1), and
- having a control and evaluation unit (14) designed to carry out the steps of the method according to one of the preceding claims.

11. DIRCM system (2) according to Claim 10,
**characterized**
**in that** the DIRCM system (2) contains:
- a pivotable detection area (BD) as a subarea (13) of the total area (BGa,b).

12. DIRCM system (2) according to Claim 11,
**characterized**
**in that** the second module (12a,b) is designed to receive the determined path of movement (BB) and/or transfer position (PU) and to align and/or reposition the subarea (13) accordingly in step C1).

13. DIRCM system (2) according to one of Claims 10 to 12,
**characterized**
**in that** the first module (12a,b) is designed to determine and/or update the path of movement (BB) and/or the transfer position (PU) in accordance with step C).

14. DIRCM system (2) according to one of Claims 10 to 13,
**characterized**
**in that** the interface (8) is an interface (8) to a warning system (10) for reporting a respective approach area (11) of an approaching target (4).

15. DIRCM system (2) according to one of Claims 10 to 14,
**characterized**
**in that** at least two of the modules (12a,b) are configured to combat the target (4) by emitting a predefinable signal pattern (30) that has a time characteristic, and the time characteristics of the modules (12a,b) are phase-synchronizable.

## Revendications

1. Procédé de combat contre une cible (4) en approche par le biais d'un système DIRCM (2), le système DIRCM (2) contenant :
- une interface (8) avec un système d'alerte (10) destiné à signaler des cibles en approche (4),
- au moins deux modules DIRCM (12a,b) destinés à détecter la cible (4) dans un mode de détection (MD) et à poursuivre la cible (4) dans un mode de poursuite (MV) et à combattre la cible (4) par irradiation dans en mode d'irradiation (MS),
- chacun des modules (12a,b) comportant une zone d'ensemble (BGa,b) destinée à détecter et/ou suivre et/ou combattre des cibles (4),
- une zone de défense (BA) étant la réunion de toutes les zones d'ensembles (BGa,b),
procédé dans lequel :
- A) lorsque la cible (4) est signalée par le système d'alerte (10) :
- un seul des modules (12a,b) est choisi comme premier module actif (12a,b) et, dans celui-ci, le mode de poursuite (MV) et le mode d'irradiation (MS) sont activés pour la cible (4),
et désormais :
- B) pour le module actif (12a,b) :
- le mode de poursuite (MV) et le mode d'irradiation (MS) restent activés pour le module actif (12a,b),
- et, pour tous les autres modules (12a,b), le mode de poursuite (MV) et le mode d'irradiation (MS) restent désactivés en ce qui concerne la cible (4),
- et une trajectoire future attendue (BB) de la cible (4) est déterminée ; et
- C) lorsque la trajectoire (BB) coupe un bord de la zone d'ensemble (BGa,b) du module actif (12a,b) en une position de transfert (PÜ) :
- C1) un deuxième module (12a,b) est sélectionné pour lequel la position de transfert (PÜ) est située dans sa zone d'ensemble (BGa,b), et le mode de détection (MD) est ou reste activé pour le deuxième module (12a, b),
- C2) et le mode de poursuite (MV) et le mode d'irradiation (MS) restent activés pour le premier module (12a,b) ; et
- D) après que le deuxième module (12a,b) a détecté la cible (4) :
- D1) le mode de poursuite (MV) est désactivé pour le premier module (12a,b) et, après que la désactivation a été effectuée, le mode de poursuite (MV) du deuxième module (12a,b) est activé,
- D2) le mode d'irradiation (MS) est désactivé pour le premier module (12a,b) et est ou reste activé pour le deuxième module (12a,b),
- D3) le deuxième module (12a,b) est déclaré comme étant le premier module (12a,b).

2. Procédé selon la revendication 1,
**caractérisé en ce que**
à l'étape C1) :
- dans le mode de détection (MD), une zone de détection pivotante est surveillée en tant que sous-zone (13) de la zone d'ensemble (BGa,b) pour rechercher la cible (4), et
- la sous-zone (13) est dirigée et/ou asservie sur la trajectoire (BB) et/ou la position de transfert (PÜ) en fonction de la trajectoire (BB) et/ou de la position de transfert (PÜ), et ce indépendamment de la cible (4).

3. Procédé selon l'une des revendications précédentes,
**caractérisé en ce que**
à l'étape A) le module actif (12a,b) est sélectionné selon un critère de sélection (KA).

4. Procédé selon la revendication 3,
**caractérisé en ce que**
le critère de sélection (KA) utilisé est :
- pour la cible (4) dans une zone solo (BOa,b) de la zone d'ensemble (BGa,b) :
- le module associé (12a,b) relatif à la zone solo (BOa,b),
- pour la cible (4) dans une zone d'intersection (BS) d'au moins deux zones d'ensemble (BGa,b) : le module (12a,b) parmi ceux de la zone d'intersection (BS) :
- dans une zone de distance spécifiée par rapport à la cible (4),
- avec le moindre écart entre la poursuite actuelle et/ou le combat et une position médiane par rapport à une zone de poursuite et/ou de combat du module (12a,b),
- avec une zone d'ensemble spécifiable (BGa,b),
- avec un pronostic de succès spécifiable pour un combat réussi.

5. Procédé selon l'une des revendications précédentes,
**caractérisé en ce que**
l'étape D) est réalisée seulement si un critère de transfert (KÜ) est satisfait, et le critère de transfert (KÜ) est en outre vérifié s'il n'est pas satisfait.

6. Procédé selon la revendication 5,
**caractérisé en ce que**
le critère de transfert (KÜ) utilisé est :
- le fait que le deuxième module (12a,b) est prêt pour une poursuite de cible et/ou une irradiation réussies,
- le fait qu'un paramètre limite spécifiable est atteint pour le premier module (12a,b) et/ou le deuxième module (12a,b),
- le fait que le premier module (12a,b) n'effectue plus une poursuite et/ou une irradiation réussies de la cible (4),
- le fait que la cible (4) atteint une surface limite spécifiable (21) dans la zone d'ensemble (BGa,b),
- le fait que la cible (4) se trouve en deçà d'une distance spécifiable par rapport au bord de la zone d'ensemble (BGa,b),
- le fait que la cible (4) quitte la zone d'ensemble (BGa,b) au niveau de la limite.

7. Procédé selon l'une des revendications précédentes,
**caractérisé en ce que**
pour combattre la cible (4), au moins le premier module (12a,b) et le deuxième module (12a,b) rayonnent un modèle de signal spécifiable qui présente une variation dans le temps, et à ou avant l'étape D2) le modèle de signal du premier module (12a,b) et celui du deuxième module (12a,b) sont synchronisés en phase en termes de variation dans le temps.

8. Procédé selon l'une des revendications précédentes,
**caractérisé en ce que**
à ou après l'étape C1), pour le deuxième module (12a,b), le mode d'irradiation (MS) est activé mais pas le mode de poursuite (MV), au moins la cible (4) n'étant pas visée, ou la cible (4) étant délibérément manquée, par le deuxième module (12a,b),
- à l'étape D2) le mode d'irradiation (MS) reste activé pour le deuxième module (12a, b) et la cible (4) est visée délibérément par le deuxième module (12b).

9. Procédé selon l'une des revendications précédentes,
**caractérisé en ce que**
au moins une ou plusieurs zones, ou la totalité de celles-ci, si elles sont présentes un zone d'ensemble, une zone solo, une zone d'intersection, une zone de détection, une sous-zone et une zone de défense (BGa,b ; BOa,b ; BS ; BD ; BA) sont définies comme modèle mathématique (26) dans un système de coordonnées et des décisions qui affectent ces zones (BGa,b ; BOa,b ; BS ; BD ; BA) sont prises à l'aide du modèle mathématique (26).

10. Système DIRCM (2) destiné à mettre en œuvre le procédé selon l'une des revendications précédentes, ledit système comprenant
- une interface (8) avec un système d'alerte (10) destiné à signaler des cibles en approche (4),
- au moins deux modules DIRCM (12a,b) comprenant une unité de détection (15) destinée à détecter la cible (4) dans un mode de détection (MD) et une unité de poursuite (16) destinée à poursuivre la cible (4) dans un mode de poursuite (MV) et une unité d'irradiation (18) destinée à combattre la cible (4) dans un mode d'irradiation (MS),
- chacun des modules (12a,b) comportant une zone d'ensemble (BGa,b) destinée à détecter et/ou poursuivre et/ou combattre des cibles (4),
- une zone de défense (BA) étant la réunion de toutes les zones d'ensemble (BGa,b),
- une unité de prédiction (28) qui est supérieure au moins au deuxième module (12a,b) et qui est conçue pour déterminer la trajectoire (BB) et/ou définir l'intersection de la trajectoire (BB) avec le bord de la zone d'ensemble (BGa,b) selon l'étape C) et/ou accepter une telle définition, et/ou sélectionner un module (12a,b) comme deuxième module (12a,b) selon l'étape C1), et
- une unité de commande et d'évaluation (14) conçue pour réaliser les étapes du procédé selon l'une des revendications précédentes.

11. Système DIRCM (2) selon la revendication 10,
**caractérisé en ce que**
le système DIRCM (2) contient :
- une zone de détection pivotante (BD) comme sous-zone (13) de la zone d'ensemble (BGa,b).

12. Système DIRCM (2) selon la revendication 11,
**caractérisé en ce que**
le deuxième module (12a,b) est conçu pour recevoir la trajectoire déterminée (BB) et/ou la position de transfert (PÜ) et à l'étape C1) pour diriger et/ou asservir la sous-zone (13) de manière correspondante.

13. Système DIRCM (2) selon l'une des revendications 10 à 12,
**caractérisé en ce que**
le premier module (12a,b) est conçu pour déterminer et/ou actualiser la trajectoire (BB) et/ou la position de transfert (PÜ) conformément à l'étape C).

14. Système DIRCM (2) selon l'une des revendications 10 à 13,
**caractérisé en ce que**
l'interface (8) est une interface (8) avec un système d'alerte (10) destinée à signaler une zone d'approche en vol respective (11) d'une cible volante en approche (4).

15. Système DIRCM (2) selon l'une des revendications 10 à 14,
**caractérisé en ce que**
au moins deux des modules (12a,b) sont conçus pour combattre la cible (4) afin de rayonner un modèle de signal spécifiable (30) qui présente une variation dans le temps, et les modules (12a,b) peuvent être synchronisés en phase en termes de variation dans le temps.
